# EUROPEAN PATENT SPECIFICATION

(11) **EP 4 324 593 B1**
(45) Date of publication and mention of the grant of the patent: **25.02.2026**
(21) Application number: 21941946.2
(22) Date of filing: 14.05.2021
(51) Int. Cl.: B23Q 11/08, E05F 15/56

(54) **DOOR DEVICE FOR MACHINE TOOL, AND MACHINE TOOL**
TÜRVORRICHTUNG FÜR WERKZEUGMASCHINE UND WERKZEUGMASCHINE
DISPOSITIF DE PORTE POUR MACHINE-OUTIL ET MACHINE-OUTIL

(43) Date of publication of application: 21.02.2024
(73) Proprietor: Yamazaki Mazak Corporation, Niwa-gun, Aichi 480-0197 (JP)
(72) Inventor: KINTOKI, Tomohiro, Niwa-gun, Aichi 480-0197 (JP); ARISUE, Kenji, Niwa-gun, Aichi 480-0197 (JP); HIROSE, Kenji, Niwa-gun, Aichi 480-0197 (JP); MAEKAWA, Reiji, Niwa-gun, Aichi 480-0197 (JP); KANEDA, Yuki, Niwa-gun, Aichi 480-0197 (JP)
(74) Representative: TBK
(86) International application number: PCT/JP2021/018311
(87) International publication number: WO 2022/239214

(56) References cited:
- EP-A2- 0 175 194
- JP-A- 2002 309 853
- JP-A- 2006 205 337
- JP-A- 2015 054 383
- JP-A- H1 061 312
- JP-A- H11 138 384
- JP-B2- 6 104 770
- KR-A- 20200 088 711
- KR-B1- 101 434 671
- KR-B1- 102 067 703
- KR-B1- 102 168 537

## Description

The present invention relates to a door device for a machine tool according to the preamble of claim 1, and a machine tool comprising such a door device.

### Background Art

Aid devices to aid opening and closing of doors of machine tools are known.

As a related technique, JP H10 - 061 312 A discloses a door open-close aid device. The door open-close aid device recited in JP H10 - 061 312 A includes a fluid pressure source, a fluid pressure actuator that applies an aid driving force to aid an open-close operation performed by a manual force, adjusting means for changing and/or adjusting the amount of flow of a working fluid supplied from the fluid pressure source to the fluid pressure actuator and changing and/or adjusting the direction or pressure of the working fluid, and a door handle mounted on the openable-closable door in a manner in which the door handle is movable in a direction in which the manual force is applied. The adjusting means is connected to the door handle in a manner in which the adjusting means operates together with a manipulation of the door handle. When the door handle is manipulated to an open side, the adjusting means supplies the working fluid to the fluid pressure actuator in a direction in which the openable-closable door is moved to the open side. When the door handle is manipulated to a closed side, the adjusting means supplies the working fluid to the fluid pressure actuator in a direction in which the openable-closable door is moved to the closed side.

JP 6 104 770 B2 shows a sliding door configuration (door device) in which an opening provided in a front cover of a lathe (machine tool) is closed by a left door and a right door, and in which at least one air cylinder comprising an air chamber is provided and is configured to, by receiving air into the air chamber, apply an assist force to open and close the doors both in an opening direction and a closing direction. In other words, JP 6 104 770 B2 A shows a door device for a machine tool according to the preamble of claim 1.

A further door device for a machine tool according to the prior art is shown in JP H11 - 138 384 A.

### Summary of Invention

It is the object of the present invention to further develop a door device for a machine tool according to the preamble of claim 1 such that the door device is configured with universal design taken into consideration to enable any worker to operate the door device with a great degree of freedom while taking any posture and performing any type of work.

The object of the present invention is achieved by a door device for a machine tool having the features of claim 1.

Further advantageous developments according to the present invention are defined in the dependent claims. In particular, a machine tool comprising, inter alia, the door device according to the present invention is defined in claim 14.

According to an advantage of the present invention, because of the height of the worker, the posture of the worker, the type of work, and/or the position of the door, the worker may need an assist force to aid the worker in opening and closing the door of the machine tool, and the door device and the machine tool provide the worker with the assist force at a timing when the worker needs the assist force.

According to an effect and another advantage of the present invention, the door device and the machine tool are configured with universal design taken into consideration to enable any worker to operate the door device and the machine tool while taking any posture and performing any type of work.

### Brief Description of Drawings

[FIG. 1] FIG. 1 is a diagram schematically illustrating a door device according to a first embodiment for a machine tool.
[FIG. 2] FIG. 2 is a diagram schematically illustrating the door device according to the first embodiment for a machine tool.
[FIG. 3] FIG. 3 is a diagram schematically illustrating the door device according to the first embodiment for a machine tool.
[FIG. 4] FIG. 4 is a diagram schematically illustrating the door device according to the first embodiment for a machine tool.
[FIG. 5] FIG. 5 is a diagram schematically illustrating an example installation of a manipulation switch.
[FIG. 6] FIG. 6 is a diagram schematically illustrating another example installation of the manipulation switch.
[FIG. 7] FIG. 7 is a schematic plan view of an example handle.
[FIG. 8] FIG. 8 is a schematic plan view of an example handle.
[FIG. 9] FIG. 9 is a diagram schematically illustrating a modification of a manipulation switch.
[FIG. 10] FIG. 10 is a diagram schematically illustrating a door device according to a first modification of the first embodiment for a machine tool.
[FIG. 11] FIG. 11 is a diagram schematically illustrating a door device according to a second modification of the first embodiment for a machine tool.
[FIG. 12] FIG. 12 illustrates an example control flow of a motion of at least one switch valve.
[FIG. 13] FIG. 13 illustrates an example control flow of a motion of the at least one switch valve.
[FIG. 14] FIG. 14 is a diagram schematically illustrating a door device according to a second embodiment for a machine tool.
[FIG. 15] FIG. 15 is a diagram schematically illustrating the door device according to the second embodiment for a machine tool.
[FIG. 16] FIG. 16 is a diagram schematically illustrating the door device according to the second embodiment for a machine tool.
[FIG. 17] FIG. 17 is a diagram schematically illustrating an example installation of a movable pulley and/or a first air cylinder.
[FIG. 18] FIG. 18 is a schematic perspective view of a machine tool according to a third embodiment.

### Description of Embodiments

By referring to the accompanying drawings, description will be made with regard to a door device 1 according to an embodiment for a machine tool, and with regard to a machine tool 100 according to the embodiment. It is noted that in the following description of the embodiments, identical reference numerals are used to denote identical portions, members, or components having identical functions, and redundant description of identical portions, members, or components will be eliminated or minimized.

### (First Embodiment)

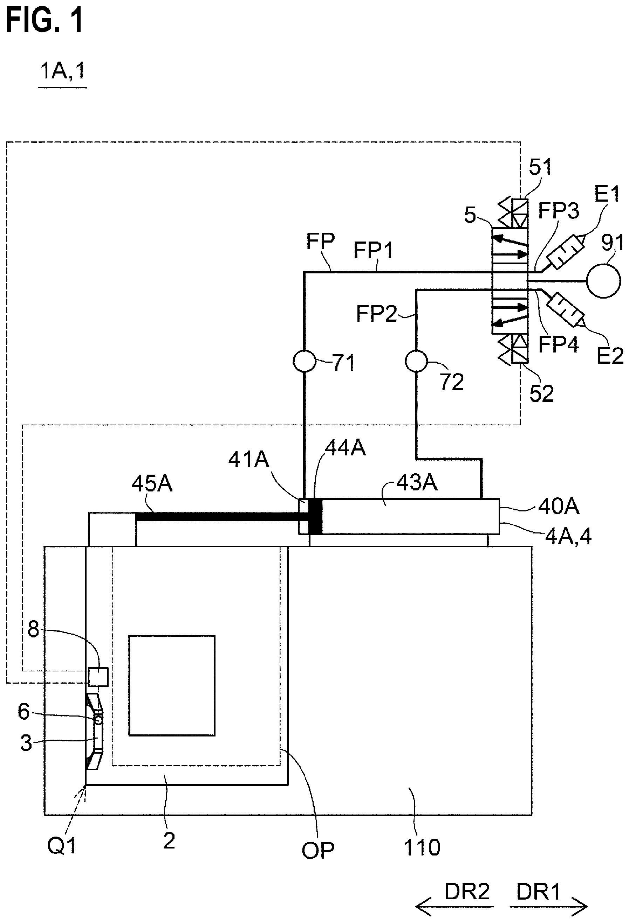

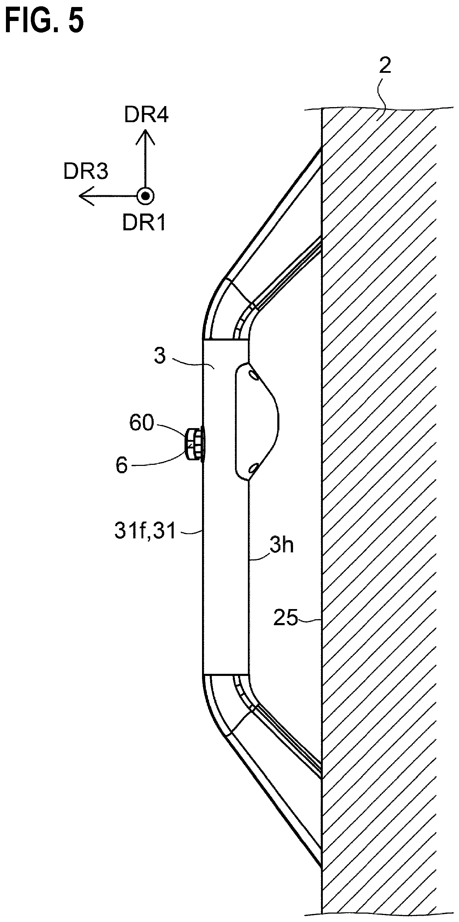

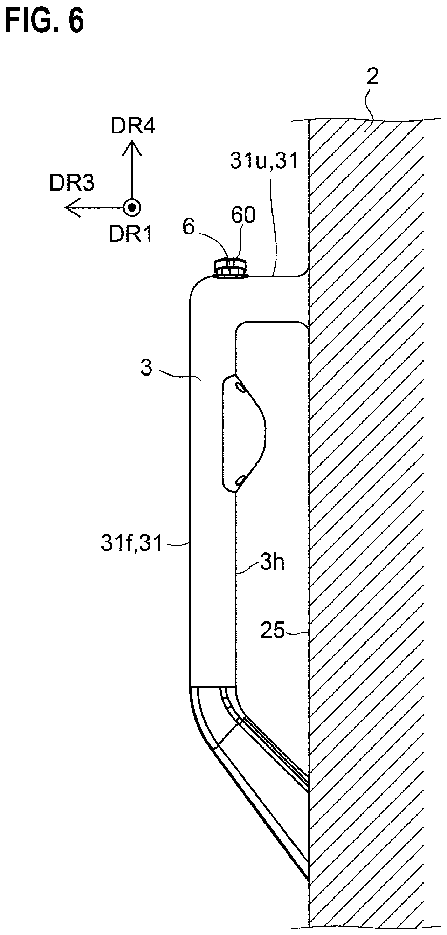

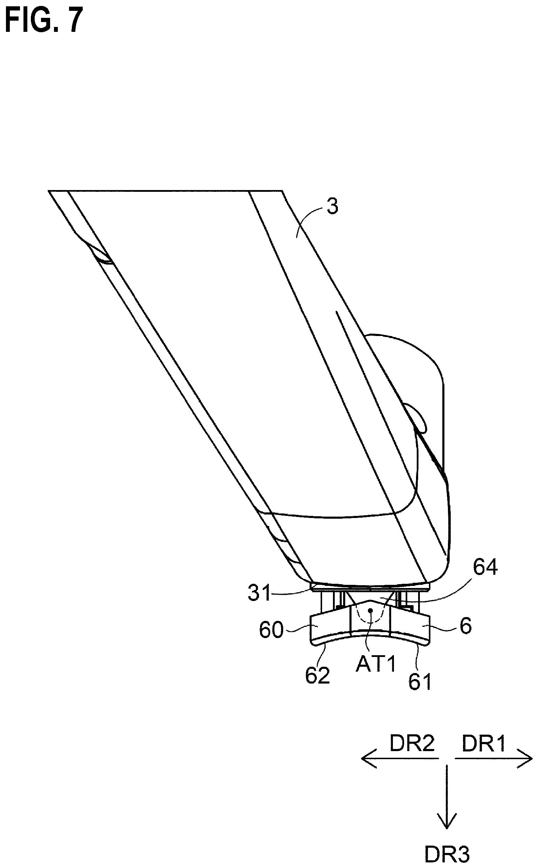

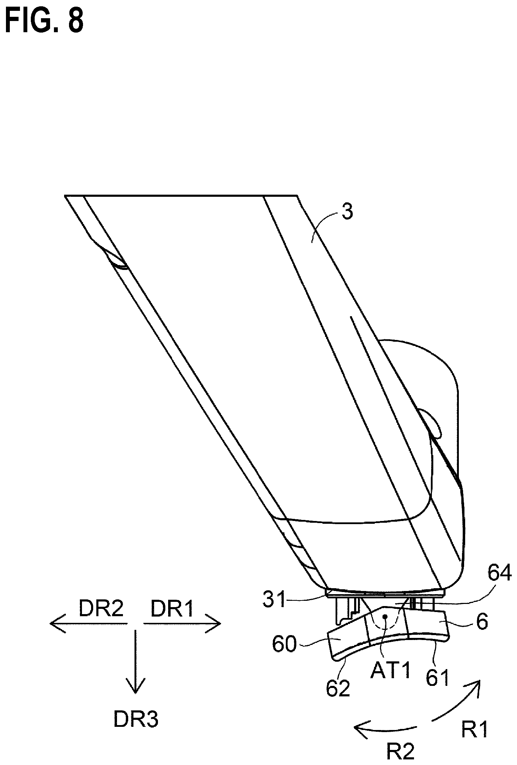

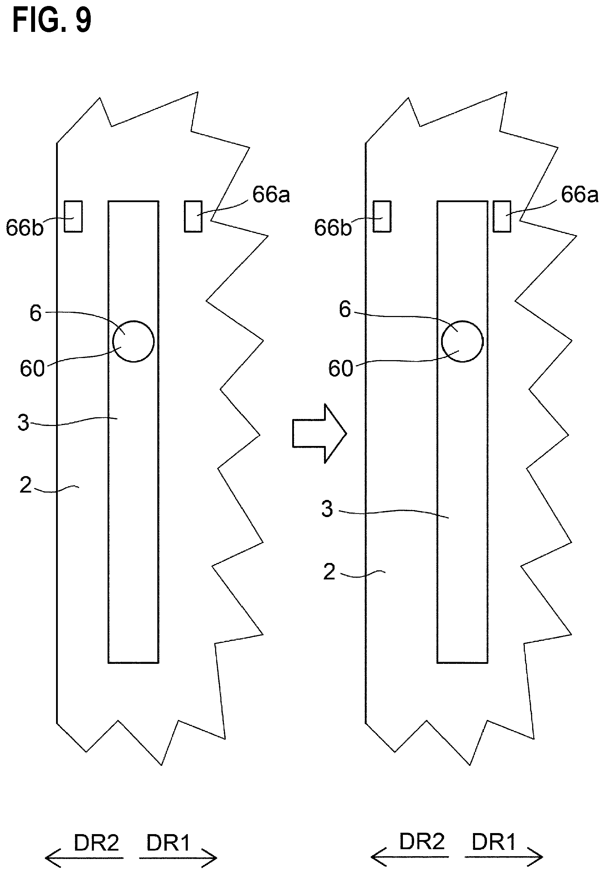

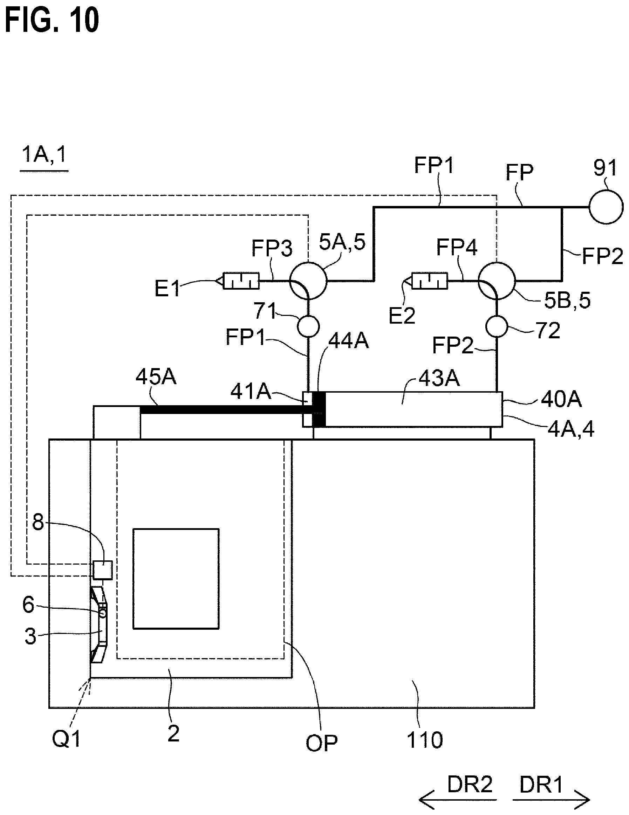

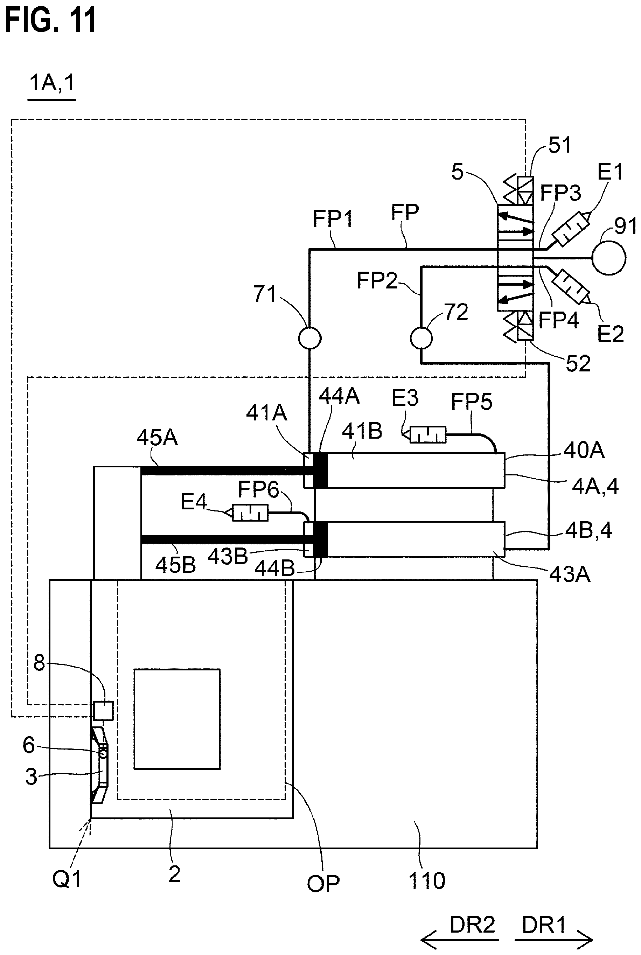

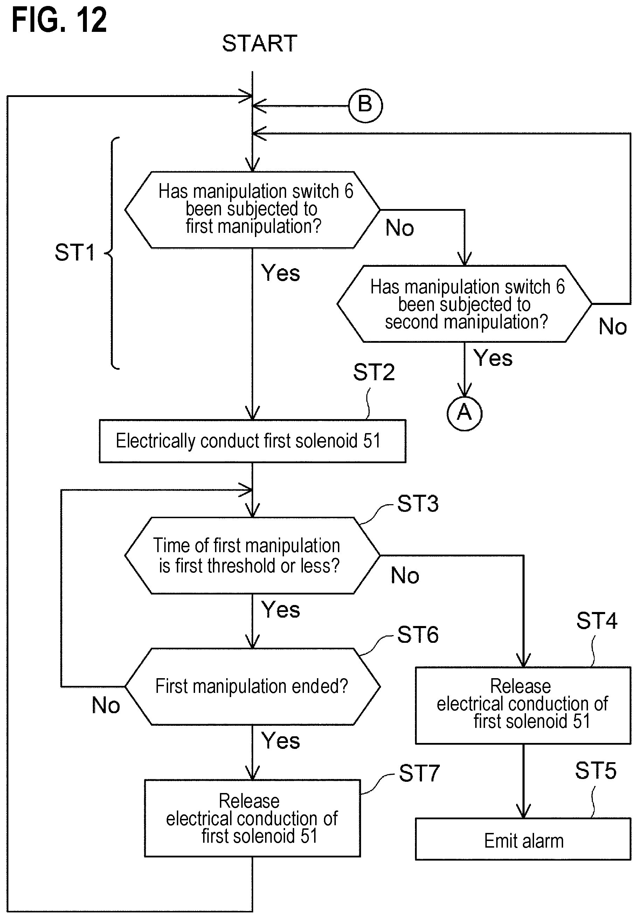

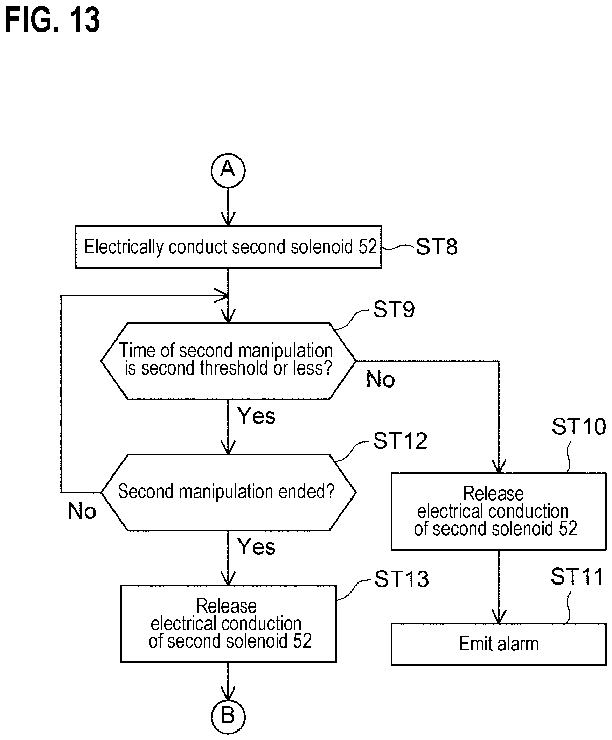

By referring to FIGs. 1 to 13, a door device 1A according to the first embodiment for a machine tool will be described. FIGs. 1 to 4 are diagrams schematically illustrating the door device 1A according to the first embodiment for a machine tool. FIG. 5 is a diagram schematically illustrating an example installation of a manipulation switch 6. FIG. 6 is a diagram schematically illustrating another example installation of the manipulation switch 6. FIGs. 7 and 8 are schematic plan views of an example handle 3. FIG. 9 is a diagram schematically illustrating a modification of the manipulation switch 6. FIG. 10 is a diagram schematically illustrating a door device 1A according to a first modification of the first embodiment for a machine tool. FIG. 11 is a diagram schematically illustrating a door device 1A according to a second modification of the first embodiment for a machine tool. FIGs. 12 and 13 illustrate example control flows of a motion of at least one switch valve 5.

As exemplified in FIG. 1, the door device 1A according to the first embodiment includes a door 2, the handle 3, at least one air cylinder 4, a fluid passage FP, the at least one switch valve 5, and the manipulation switch 6.

The door 2 is slidable between a first position Q1 and a second position Q2. The first position Q1 (see FIG. 1) is a position at which the door 2 closes an opening OP of a housing 110, which defines the inner region of the machine tool. The second position Q2 (see FIG. 1) is a position at which the door 2 opens the opening OP. The direction from the first position Q1 toward the second position Q2 is defined as first direction *DR1,* and the direction from the second position Q2 toward the first position Q1 is defined as second direction *DR2*. The door 2 is slidable in the first direction *DR1* and slidable in the second direction *DR2.* In the example illustrated in FIG. 1, the first direction *DR1* and the second direction *DR2* are directions parallel to horizontal direction.

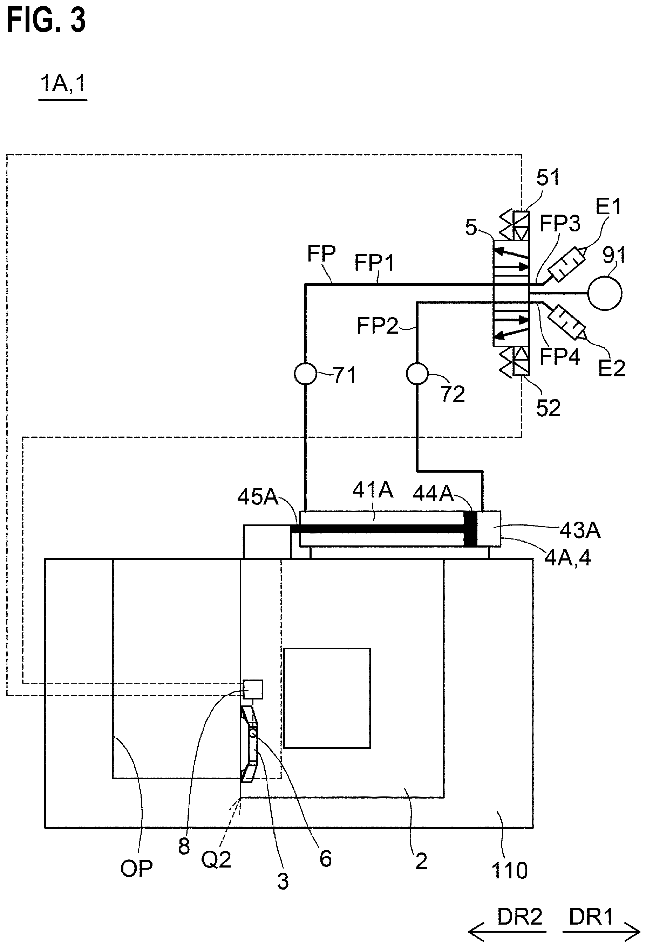

The handle 3 is provided at the door 2. The handle 3 may be a knob mounted on the door 2 or may be a depression provided in part of the door 2. In the example illustrated in FIG. 1, the handle 3 is manipulated in the first direction *DR1,* and the door 2 is moved from the first position Q1 toward the second position Q2. Also in the example illustrated in FIG. 3, the handle 3 is manipulated in the second direction *DR2* (in other words, the direction opposite to the first direction *DR1*), and the door 2 is moved from the second position Q2 toward the first position Q1.

The at least one air cylinder 4 includes a first air chamber 41A. By receiving air supplied into the first air chamber 41A, the at least one air cylinder 4 applies a first assist force to the door 2 in the first direction *DR1.* In the example illustrated in FIG. 1, air can be supplied into the first air chamber 41A from the air supply source 91.

The at least one air cylinder 4 may include a second air chamber 43A. By receiving air supplied into the second air chamber 43A, the at least one air cylinder 4 applies a second assist force to the door 2 in the second direction *DR2.* In the example illustrated in FIG. 1, air can be supplied into the second air chamber 43A from the air supply source 91.

In the example illustrated in FIG. 1, the at least one air cylinder 4 includes a first air cylinder 4A. It is the first air cylinder 4A that includes both the first air chamber 41A and the second air chamber 43A.

The fluid passage FP includes a first fluid passage FP1. The first fluid passage FP1 connects the first air chamber 41A and the air supply source 91 to each other. The fluid passage FP may include a second fluid passage FP2. The second fluid passage FP2 connects the second air chamber 43A and the air supply source 91 to each other. As exemplified in FIG. 1, part of the first fluid passage FP1 and part of the second fluid passage FP2 may be commonized (in the example illustrated in FIG. 1, the part defined between the air supply source 91 and the switch valve 5 is common to the first fluid passage FP1 and the second fluid passage FP2). Alternatively, the first fluid passage FP1 and the second fluid passage FP2 may be completely independent of each other. In the example illustrated in FIG. 1, the at least one switch valve 5 is provided at the fluid passage FP.

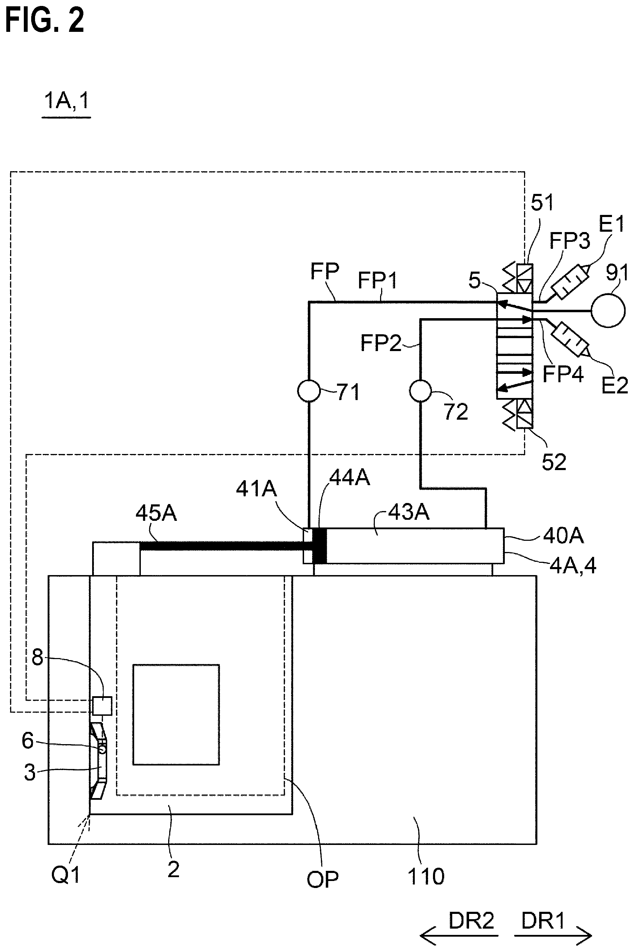

The manipulation switch 6 switches the state of the at least one switch valve 5 between the first state exemplified in FIG. 1 and the second state exemplified in FIG. 2.

In the first state exemplified in FIG. 1, the door 2 is permitted to move in the first direction *DR1* or the second direction *DR2* without the first assist force. In the example illustrated in FIG. 1, in the first state, the at least one switch valve 5 fluidally connects the first air chamber 41A to a first atmosphere release hole E1, through which the air inside the first air chamber 41A is released. In this case, when a worker manipulates the handle 3 in the first direction *DR1,* the door 2 is moved from the first position Q1 toward the second position Q2 without the first assist force. It is to be noted that as exemplified in FIG. 1, in the first state, the at least one switch valve 5 may fluidally connect the second air chamber 43A to a second atmosphere release hole E2, through which the air inside the second air chamber 43A is released.

In the second state exemplified in FIG. 2, the first assist force is applied to the door 2 in the first direction *DR1.* In the example illustrated in FIG. 2, in the second state, the at least one switch valve 5 fluidally connects the air supply source 91 and the first air chamber 41A to each other to cause air to be supplied into the first air chamber 41A. In this case, if the worker manipulates the handle 3 in the first direction *DR1,* the door 2 is moved from the first position Q1 toward the second position Q2 by a combination of the first assist force and the manipulation force of the worker. It is to be noted that as exemplified in FIG. 2, in the second state, the at least one switch valve 5 may fluidally connect the second atmosphere release hole E2 and the second air chamber 43A to each other.

In the first embodiment, the door device 1A for a machine tool is capable of switching the state of the at least one switch valve 5 between the first state and the second state. In the first state, the door 2 is permitted to move in the first direction *DR1* or the second direction *DR2* without the first assist force. In the second state, the first assist force is applied to the door 2 in the first direction *DR1.* With this configuration of the first embodiment, the door device 1A for a machine tool is easy to use for both a worker who needs an assist force and a worker who does not need an assist force. More specifically, the door device 1A for a machine tool is configured with universal design taken into consideration to enable any worker to operate the door device and the machine tool while taking any posture and performing any type of work. Also, the door device 1A according to the first embodiment for a machine tool includes the manipulation switch 6, which switches the state of the at least one switch valve 5 between the first state and the second state. This enables the worker to select the first state or the second state on the worker's own will. For example, a worker who does not need an assist force may select the first state to open the door 2 as if to open a usual door without assist functions, ensuring no or minimal degradation of work efficiency. Also, a worker who needs an assist force may select the second state to open the door 2 with a small degree of force.

In the first state (see FIG. 1), the air chamber of the air cylinder 4 is fluidally connected to an atmosphere release hole. This ensures that even if the motive power source is disconnected (more specifically, even if air can not be supplied from the air supply source 91 to the fluid passage FP), the door 2 can be moved freely in the first direction *DR1* or the second direction *DR2*.

In the second state (see FIG. 1), the second air chamber 43A of the air cylinder 4 may be fluidally connected to the second atmosphere release hole E2. In this case, by increasing the manipulation force applied to the handle 3 in the first direction *DR1,* the movement speed of the door 2 can be increased. In other words, insofar as the speed of air supply to the first air chamber 41A is less than a threshold value, the presence of the mechanism to apply assist force does not interfere with the increase in the movement speed of the door 2. In this case, the worker is able to realize utilizing the assist force and quickly opening the door 2 simultaneously.

In the examples illustrated in FIGs. 1 and 2, the door 2 located at the first position Q1 can be moved to any desired position between the first position Q1 and the second position Q2 and stopped at the desired position. Also in the examples illustrated in FIGs. 1 and 2, when the door 2 stopped at the desired position between the first position Q1 and the second position Q2 is moved again, the worker is able to move the door 2 without the first assist force. Also when the door 2 stopped at the desired position between the first position Q1 and the second position Q2 is moved again, the worker is able to move the door 2 by manipulating the manipulation switch 6 to utilize the first assist force.

### (Optional Configurations)

Next, by referring to FIGs. 1 to 13, description will be made with regard to optional configurations employable in the door device 1A according to the first embodiment for a machine tool or in a door device 1B, described later, according to the second embodiment for a machine tool.

### (Degree of First Assist Force)

The first assist force may be smaller in degree than the force necessary for sliding the door 2. In other words, the first assist force may be set to a degree at which the door 2 can not be moved in the first direction *DR1* without an additional force other than the first assist force. In this case, in the state of the first assist force being applied, the position of the door 2 remains unchanged unless the worker applies a force to the handle 3. Alternatively, the first assist force may be set to a degree at which the door 2 can be moved at low speed in the first direction *DR1* with the first assist force alone. The degree of the first assist force may be adjusted by, for example, changing a first set pressure of a first regulator 71, described later.

### (Application of Second Assist Force)

In the example illustrated in FIG. 3, the at least one air cylinder 4 (more specifically, the first air cylinder 4A) includes the second air chamber 43A. By receiving air supplied into the second air chamber 43A, the at least one air cylinder 4 applies a second assist force to the door 2 in the second direction *DR2.* In order to ensure air supply into the second air chamber 43A, the fluid passage FP includes the second fluid passage FP2, which connects the second air chamber 43A and the air supply source 91 to each other.

The manipulation switch 6 is capable of switching the state of the at least one switch valve 5 between the first state and a third state. In the first state (see FIG. 1), the door 2 is permitted to move in the first direction *DR1* or the second direction *DR2* without the first assist force and the second assist force. In the third state (see FIG. 1), the second assist force is applied to the door 2 in the second direction *DR2*.

In the first state exemplified in FIG. 3, the door 2 is permitted to move in the first direction *DR1* or the second direction *DR2* without the first assist force and the second assist force. In the example illustrated in FIG. 3, in the first state, the at least one switch valve 5 fluidally connects the first air chamber 41A to the first atmosphere release hole E1, through which the air inside the first air chamber 41A is released. The at least one switch valve 5 also fluidally connects the second air chamber 43A to the second atmosphere release hole E2, through which the air inside the second air chamber 43A is released. In this case, if the worker manipulates the handle 3 in the second direction *DR2,* the door 2 is moved from the second position Q2 toward the first position Q1 without the second assist force.

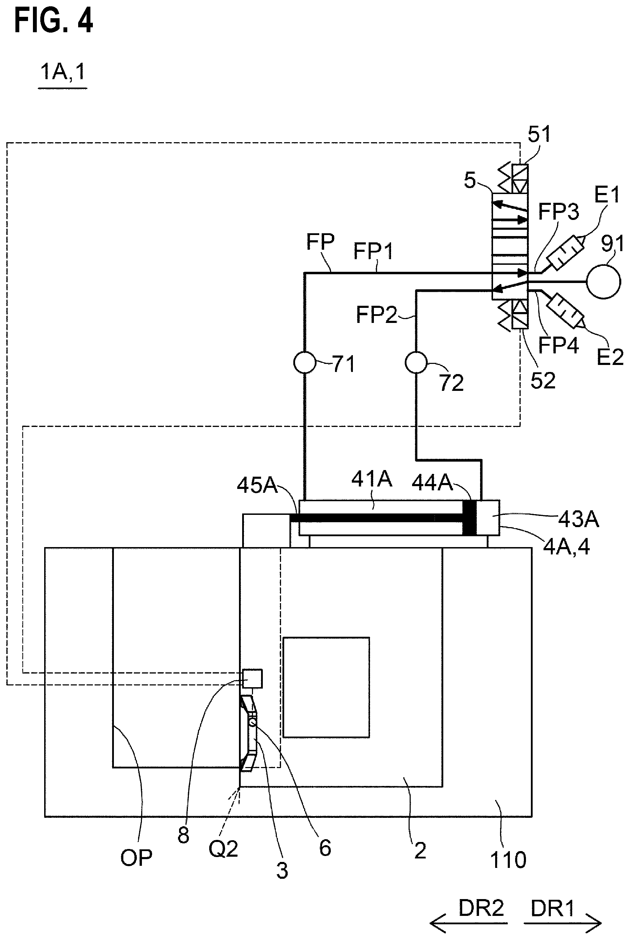

In the third state exemplified in FIG. 4, the second assist force is applied to the door 2 in the second direction *DR2.* In the example illustrated in FIG. 4, in the third state, the at least one switch valve 5 fluidally connects the first atmosphere release hole E1 and the first air chamber 41A to each other, and fluidally connects the air supply source 91 and the second air chamber 43A to each other. In this case, if the worker manipulates the handle 3 in the second direction *DR2,* the door 2 is moved from the second position Q2 toward the first position Q1 by a combination of the second assist force and the manipulation force of the worker.

In the example illustrated in FIG. 3, a worker who does not need an assist force may select the first state to close the door 2 as if to close a usual door without assist functions, ensuring no or minimal degradation of work efficiency. Also, a worker who needs an assist force may select the third state to close the door 2 with a small degree of force.

In the third state (see FIG. 1), the first air chamber 41A of the air cylinder 4 and the first atmosphere release hole E1 are fluidally connected to each other. With this configuration, by increasing the manipulation force applied to the handle 3 in the second direction *DR2*, the movement speed of the door 2 can be increased. This enables the worker to realize utilizing the assist force and quickly closing the door 2 simultaneously.

Also in the examples illustrated in FIGs. 3 and 4, the door 2 located at the second position Q2 can be moved to any desired position between the second position Q2 and the first position Q1 and stopped at the desired position. Also in the examples illustrated in FIGs. 3 and 4, when the door 2 stopped at the desired position between the second position Q2 and the first position Q1 is moved again, the worker is able to move the door 2 without the first assist force and the second assist force. Also when the door 2 stopped at the desired position between the second position Q2 and the first position Q1 is moved again, the worker is able to move the door 2 in the first direction *DR1* or the second direction *DR2* by manipulating the manipulation switch 6 to use the first assist force or the second assist force .

### (Degree of Second Assist Force)

The second assist force may be smaller in degree than the force necessary for sliding the door 2. In other words, the second assist force may be set to a degree at which the door 2 can not be moved in the second direction *DR2* without an additional force other than the second assist force. In this case, in the state of the second assist force being applied, the position of the door 2 remains unchanged unless the worker applies a force to the handle 3. Alternatively, the second assist force may be set to a degree at which the door 2 can be moved at low speed in the second direction *DR2* with the second assist force alone. The degree of second assist force may be adjusted by, for example, changing a second set pressure of a second regulator 72, described later.

### (Manipulation Switch 6)

In the examples illustrated in FIGs. 1 to 4, all manipulations of the manipulation switch 6 are performable independently of the manipulation of the handle 3. In other words, in the examples illustrated in FIGs. 1 to 4, the manipulation switch 6 is not manipulated together with a manipulation of the handle 3. This provides a greater degree of freedom on the timing to switch the state between the first state and the second state (or the third state). For example, before the handle 3 is manipulated in the first direction *DR1* (or the second direction *DR2),* the manipulation switch 6 may be manipulated to switch the state of the switch valve 5 from the first state to the assisted second state (or the assisted third state). Also, while the door 2 is being moved, the manipulation switch 6 may be manipulated (for example, fingers may be removed from the manipulation switch 6) to switch the state of the switch valve 5 from the second state or the third state to the no-assist first state. In other words, it is possible to use an assist force until the movement speed of the door 2 reaches a predetermined speed and then stop using the assist force.

In the example illustrated in FIG. 5, the manipulation switch 6 is provided at the handle 3 to simultaneously realize holding the handle 3 by the hand and manipulating the manipulation switch 6 using a finger of the hand holding the handle 3 (for example, the thumb). Thus, the motion of holding the handle 3 and the motion of manipulating the manipulation switch 6 are performable approximately simultaneously. As a result, the handle 3 and the manipulation switch 6 are efficiently manipulated.

A direction perpendicular to a main surface 25 of the door 2 pointed from the inside of the door 2 toward the outside of the door 2 is defined as third direction *DR3.* In this case, in the example illustrated in FIG. 5, the manipulation switch 6 is provided on a surface 31f of the handle 3. The surface 31f is on the third direction *DR3* side of the handle 3 (in other words, its front-side surface). An alternative example is illustrated in FIG. 6. A direction pointed perpendicularly upward is defined as fourth direction *DR4.* In this case, the manipulation switch 6 may be provided on a surface 31u of the handle 3. The surface 31u is on the fourth direction *DR4* side of the handle 3 (in other words, the upper surface of the handle 3). In the example illustrated in FIG. 6 as well, holding the handle 3 by the hand and manipulating the manipulation switch 6 using a finger of the hand holding the handle 3 (for example, the thumb) are simultaneously realized.

In the examples illustrated in FIGs. 5 and 6, an open area 3h is formed between the handle 3 and the door 2. The open area 3h is for four fingers of the worker to insert (the four fingers are forefinger, middle finger, ring finger, and little finger). In the examples illustrated in FIGs. 5 and 6, the manipulation switch 6 is provided at the handle 3 to enable the worker to manipulate the manipulation switch 6 using the thumb of the worker with the remaining four fingers inserted in the open area 3h.

As exemplified in FIGs. 5 and 6, a manipulation part 60 of the manipulation switch 6 (which part is manipulated by the worker) may be provided to protrude from the outer surface, 31, of the handle 3. In this case, the manipulation part 60 is easily manipulated. In the example illustrated in FIG. 5, the manipulation part 60 protrudes further in the third direction *DR3* than the surface 31f of the handle 3 which surface is on the third direction *DR3* side of the handle 3. In the example illustrated in FIG. 6, the manipulation part 60 protrudes further in the fourth direction *DR4* than the surface 31u of the handle 3 which surface is on the fourth direction *DR4* side of the handle 3.

In the examples illustrated in FIGs. 5 and 6, the handle 3 is a fixed handle mounted on the door 2 unmovably relative to the door 2. Alternatively, the handle 3 may be a movable handle mounted on the door 2 movably relative to the door 2 (for example, a handle swingable about a swing axis).

In the example illustrated in FIG. 7, the manipulation switch 6 includes a first manipulation part 61 and a second manipulation part 62. The first manipulation part 61 switches the state of the at least one switch valve 5 from the first state to the second state. The second manipulation part 62 switches the state of the at least one switch valve 5 from the first state to the third state. The first manipulation part 61 is provided further on the first direction *DR1* side than the second manipulation part 62. In this case, by manipulating the first manipulation part 61, which is provided on the first direction *DR1* side, the worker is able to apply the first assist force to the door 2 in the first direction *DR1.* Also, by manipulating the second manipulation part 62, which is provided on the second direction *DR2* side, the worker is able to apply the second assist force to the door 2 in the second direction *DR2.*

In the example illustrated in FIG. 7, the manipulation part 60, which includes the first manipulation part 61 and the second manipulation part 62, is supported by a manipulation-part support member 64 in a manner in which the manipulation part 60 is swingable about a first axis AT1, which is perpendicular to the first direction *DR1.* In the example illustrated in FIG. 7, a part of the manipulation-part support member 64 is embedded in the handle 3, and another part of the manipulation-part support member 64 protrudes from the outer surface 31 of the handle 3. In the example illustrated in FIG. 7, the first axis AT1 is provided on the outside of the handle 3. Alternatively, the first axis AT1 may be provided to cross the handle 3.

In the example illustrated in FIG. 7, upon pressing of the first manipulation part 61, the manipulation part 60 located a default position (in other words, neutral position) tilts about the first axis AT1 (see FIG. 1) in a first rotation direction *R1* toward a first manipulation position. Upon manipulation of the manipulation part 60 to tilt to the first manipulation position, the state of the at least one switch valve 5 is switched from the first state to the second state. In contrast, upon pressing of the second manipulation part 62, the manipulation part 60 located at the default position (in other words, neutral position) tilts about the first axis AT1 in a second rotation direction *R2* (which is the direction opposite to the first rotation direction *R1*) toward a second manipulation position. Upon manipulation of the manipulation part 60 to tilt to the second manipulation position, the state of the at least one switch valve 5 is switched from the first state to the third state.

The manipulation part 60 is preferably configured to automatically return to the default position from the first manipulation position (or the second manipulation position).

In other words, the manipulation part 60 is preferably biased by a biasing member such as a spring in a direction from the first manipulation position (or the second manipulation position) toward the default position. In this case, if the worker removes the worker's fingers from the manipulation part 60, the manipulation part 60 automatically returns from the first manipulation position (or the second manipulation position) to the default position. Upon returning of the manipulation part 60 of the manipulation switch 6 to the default position, the state of the switch valve 5 returns to the first state from the second state or the third state.

In the example illustrated in FIG. 8, the manipulation switch 6 is a switch that switches the state of the switch valve 5 only by manipulating the manipulation part 60. Alternatively, the manipulation switch 6 may be a switch that switches the state of the switch valve 5 by manipulating the manipulation part 60 and manipulating the handle 3. In the example illustrated in FIG. 9, upon pressing of the manipulation part 60 and application of a manipulation force to the handle 3 in the first direction *DR1,* the state of the switch valve 5 is switched from the first state to the second state. In contrast, upon pressing of the manipulation part 60 and application of a manipulation force to the handle 3 in the second direction *DR2,* the state of the switch valve 5 is switched from the first state to the third state. Upon application of a manipulation force to the handle 3 in the first direction *DR1* or the second direction *DR2* with the manipulation part 60 un-pressed, the state of the switch valve 5 is kept at the first state.

In the example illustrated in FIG. 9, at least one manipulation of the manipulation switch 6 (more specifically, a manipulation of the manipulation part 60) is performable independently of the manipulation of the handle 3. This provides a greater degree of freedom on the timing to switch the state between the first state and the second state (or the third state). For example, while the door 2 is being moved, the manipulation switch 6 may be manipulated (for example, fingers may be removed from the manipulation switch 6) to switch the state of the switch valve 5 from the second state or the third state to the no-assist first state.

In the example illustrated in FIG. 9, upon application of a manipulation force to the handle 3 in the first direction *DR1* or the second direction *DR2,* the handle 3 is moved relative to the door 2. In this case, a detection as to whether a manipulation force is being applied to the handle 3 in the first direction *DR1* may be performed by a first sensor 66a (an example of which is a first proximity sensor). The first sensor 66a detects a movement of the handle 3 relative to the door 2. Also, a detection as to whether a manipulation force is being applied to the handle 3 in the second direction *DR2* may be performed by a second sensor 66b (an example of which is a second proximity sensor). The second sensor 66b detects a movement of the handle 3 relative to the door 2.

Alternatively, a detection as to whether a manipulation force is being applied to the handle 3 in the first direction *DR1* or the second direction *DR2* may be performed by a load sensor embedded in the handle 3.

In the examples illustrated in FIGs. 1 to 9, upon release of pressing of the manipulation part 60 when the state of the switch valve 5 is the second state or the third state, the state of the switch valve 5 returns to the first state. Alternatively, the state of the switch valve 5 may be kept at the second state or the third state even if the pressing of the manipulation part 60 is released when the state of the switch valve 5 is the second state or the third state. In other words, the state of the switch valve 5 may be kept at the second state or the third state unless the manipulation part 60 is positively manipulated.

### (Switch Valve 5)

The default state of the at least one switch valve 5 is preferably the first state. More specifically, in a power-source disconnected state in which no power is supplied to the switch valve 5, the state of the switch valve 5 is preferably kept at the first state. In this case, when power is off (for example, at the time of power failure), the door 2 can be moved freely in the first direction *DR1* or the second direction *DR2*.

An example of the switch valve 5 is a solenoid valve. In this case, by turning the state of a solenoid of the switch valve 5 into a conduction state, the state of the switch valve 5 is switched from the first state to the second state (or the third state). By turning the state of the solenoid of the switch valve 5 into a non-conduction state, the state of the switch valve 5 is kept at the first state. In the example illustrated in FIG. 1, the switch valve 5 includes a first solenoid 51 and a second solenoid 52. By performing a first manipulation to force the manipulation part 60 of the manipulation switch 6 toward the first manipulation position, the first solenoid 51 is electrically conducted. Upon electrical conduction of the first solenoid 51, the state of the switch valve 5 is switched from the first state to the second state (see FIG. 1). By performing a second manipulation to force the manipulation part 60 of the manipulation switch 6 toward the second manipulation position, the second solenoid 52 is electrically conducted. Upon electrical conduction of the second solenoid 52, the state of the switch valve 5 is switched from the first state to the third state (see FIG. 1). When the manipulation part 60 of the manipulation switch 6 is at the default position, the state of the switch valve 5 is kept at the first state.

In the example illustrated in FIG. 1, the switching between the first state and the second state and the switching between the first state and the third state are performed by a single switch valve 5. More specifically, the switch valve 5 realizes the following. (1) As exemplified in FIG. 1, the switch valve 5 realizes a no-assist state in which the first air chamber 41A and the first atmosphere release hole E1 are fluidally connected to each other, and the second air chamber 43A and the second atmosphere release hole E2 are fluidally connected to each other. (2) As exemplified in FIG. 2, the switch valve 5 realizes a first assist state in which the first air chamber 41A and the air supply source 91 are fluidally connected to each other, and the second air chamber 43A and the second atmosphere release hole E2 are fluidally connected to each other. (3) As exemplified in FIG. 4, the switch valve 5 realizes a second assist state in which the first air chamber 41A and the first atmosphere release hole E1 are fluidally connected to each other, and the second air chamber 43A and the air supply source 91 are fluidally connected to each other.

Alternatively, as exemplified in FIG. 10, the switching between the first state and the second state (or the switching between the first state and the third state) may be performed by a plurality of switch valves 5. In the example illustrated in FIG. 10, the at least one switch valve 5 includes a first switch valve 5A and a second switch valve 5B. The first switch valve 5A is provided at the first fluid passage FP1, which connects the first air chamber 41A and the air supply source 91 to each other. The second switch valve 5B is provided at the second fluid passage FP2, which connects the second air chamber 43A and the air supply source 91 to each other.

In the example illustrated in FIG. 10, the first switch valve 5A and the second switch valve 5B realize the first state, in which the door 2 is permitted to move in the first direction *DR1* or the second direction *DR2* without the first assist force and the second assist force. More specifically, in the first state, the first switch valve 5A maintains a fluid connection state between the first air chamber 41A and the first atmosphere release hole E1. The second switch valve 5B maintains a fluid connection state between the second air chamber 43A and the second atmosphere release hole E2. Assume a case where the state of the plurality of switch valves 5, which include the first switch valve 5A and the second switch valve 5B, is the first state. In this case, if the worker manipulates the handle 3 in the first direction *DR1* (or the second direction *DR2),* the door 2 is moved in the first direction *DR1* (or the second direction *DR2*) without the first assist force.

In the example illustrated in FIG. 10, the first switch valve 5A and the second switch valve 5B realize the second state, in which the first assist force is applied to the door in the first direction *DR1.* More specifically, in the second state, the first switch valve 5A fluidally connects the first air chamber 41A to the air supply source 91 to cause air to be supplied into the first air chamber 41A. The second switch valve 5B fluidally connects the second air chamber 43A to the second atmosphere release hole E2. Assume a case where the state of the plurality of switch valves 5, which include the first switch valve 5A and the second switch valve 5B, is the second state. In this case, if the worker manipulates the handle 3 in the first direction *DR1,* the door 2 is moved in the first direction *DR1* by a combination of the first assist force and the manipulation force of the worker.

In the example illustrated in FIG. 10, the first switch valve 5A and the second switch valve 5B realize the third state, in which the second assist force is applied to the door in the second direction *DR2*. More specifically, in the third state, the first switch valve 5A fluidally connects the first air chamber 41A to the first atmosphere release hole E1, and the second switch valve 5B fluidally connects the second air chamber 43A to the air supply source 91 to cause air to be supplied into the second air chamber 43A. Assume a case where the state of the plurality of switch valves 5, which include the first switch valve 5A and the second switch valve 5B, is the third state. In this case, if the worker manipulates the handle 3 in the second direction *DR2,* the door 2 is moved in the second direction *DR2* by a combination of the second assist force and the manipulation force of the worker.

### (Air Cylinder 4)

In the example illustrated in FIG. 1, the at least one air cylinder 4 includes the first air cylinder 4A. The first air cylinder 4A includes the first air chamber 41A, the second air chamber 43A, and a first piston 44A. The first piston 44A is provided between the first air chamber 41A and the second air chamber 43A. The first air cylinder 4A may include a first rod 45A. The first rod 45A is connected to the first piston 44A.

In the example illustrated in FIG. 1, the first air cylinder 4A includes the first air chamber 41A, which is connectable to the air supply source 91 via the first fluid passage FP1, and the second air chamber 43A, which is connectable to the air supply source 91 via the second fluid passage FP2. The first piston 44A is driven by the pressure difference between the first air chamber 41A and the second air chamber 43A. The first rod 45A is movable together with the first piston 44A. The first rod 45A is directly connected to the door 2, or is indirectly connected to the door 2 via a mechanical transfer member such as a belt, a wire, a cable, and a gear.

In the example illustrated in FIG. 1, when the state of the at least one switch valve 5 is the first state, the first air chamber 41A and the first atmosphere release hole E1 are fluidally connected to each other, and the second air chamber 43A and the second atmosphere release hole E2 are fluidally connected to each other. This configuration enables the first piston 44A and the first rod 45A to move relative to a body 40A of the first air cylinder 4A with substantially no resistance in response to a movement of the door 2 in the first direction *DR1* or the second direction *DR2.* In the example illustrated in FIG. 2, when the state of the at least one switch valve 5 is the second state, the first air chamber 41A and the air supply source 91 are fluidally connected to each other, and the second air chamber 43A and the second atmosphere release hole E2 are fluidally connected to each other. With this configuration, the first assist force is applied to the door 2 in the first direction *DR1.* In the example illustrated in FIG. 4, when the state of the at least one switch valve 5 is the third state, the second air chamber 43A and the air supply source 91 are fluidally connected to each other, and the first air chamber 41A and the first atmosphere release hole E1 are fluidally connected to each other. With this configuration, the second assist force is applied to the door 2 in the second direction *DR2*.

In the example illustrated in FIG. 1, the number of air cylinders to apply the first assist force or the second assist force to the door 2 is one. Alternatively, as exemplified in FIG. 11, the number of air cylinders to apply the first assist force or the second assist force to the door 2 may be two or more. In other words, the at least one air cylinder 4, which applies the first assist force or the second assist force to the door 2, may include the first air cylinder 4A and a second air cylinder 4B.

In the example illustrated in FIG. 11, the first air cylinder 4A includes the first air chamber 41A; a third air chamber 41B; the first piston 44A, which is provided between the first air chamber 41A and the third air chamber 41B; and the first rod 45A, which is connected to the first piston 44A. The second air cylinder 4B includes the second air chamber 43A; a fourth air chamber 43B; a second piston 44B, which is provided between the second air chamber 43A and the fourth air chamber 43B; and a second rod 45B, which is connected to the second piston 44B.

In the example illustrated in FIG. 11, the first air cylinder 4A includes the first air chamber 41A, which is connectable to the air supply source 91 via the first fluid passage FP1. The second air cylinder 4B includes the second air chamber 43A, which is connectable to the air supply source 91 via the second fluid passage FP2. In the example illustrated in FIG. 11, the first air chamber 41A is provided at the first air cylinder 4A. The first air chamber 41A is connected to the air supply source 91 at the time when the first assist force is applied to the door 2 in the first direction *DR1.* The second air chamber 43A is provided at the second air cylinder 4B. The second air chamber 43A is connected to the air supply source 91 at the time when the second assist force is applied to the door 2 in the second direction *DR2.* In the first embodiment, as exemplified in FIG. 1, the first air chamber 41A and the second air chamber 43A may be provided at a single first air cylinder 4A. As exemplified in FIG. 11, the first air chamber 41A and the second air chamber 43A may be provided separately at a plurality of air cylinders (4A and 4B).

### (Fluid Passage FP)

In the examples illustrated in FIGs. 1, 10, and 11, the fluid passage FP includes the first fluid passage FP1, which fluidally connects the first air chamber 41A and the air supply source 91 to each other. In the examples illustrated in FIGs. 1 and 11, the switch valve 5 is provided at the first fluid passage FP1. In the example illustrated in FIG. 10, the first switch valve 5A is provided at the first fluid passage FP1.

In the examples illustrated in FIGs. 1, 10, and 11, the fluid passage FP includes the second fluid passage FP2, which fluidally connects the second air chamber 43A and the air supply source 91 to each other. In the examples illustrated in FIGs. 1 and 11, the switch valve 5 is provided at the second fluid passage FP2. In the example illustrated in FIG. 10, the second switch valve 5B is provided at the second fluid passage FP2.

In the examples illustrated in FIGs. 1, 10, and 11, the fluid passage FP includes a third fluid passage FP3. The third fluid passage FP3 fluidally connects the first air chamber 41A and the first atmosphere release hole E1 to each other. In the examples illustrated in FIGs. 1 and 11, the switch valve 5 is provided at the third fluid passage FP3. In the example illustrated in FIG. 10, the first switch valve 5A is provided at the third fluid passage FP3. Part of the third fluid passage FP3 and part of the first fluid passage FP1 may be commonized (for example, the fluid passage between the first air chamber 41A and the switch valve 5 is commonized).

In the examples illustrated in FIGs. 1, 10, and 11, the fluid passage FP includes a fourth fluid passage FP4. The fourth fluid passage FP4 fluidally connects the second air chamber 43A and the second atmosphere release hole E2 to each other. In the examples illustrated in FIGs. 1 and 11, the switch valve 5 is provided at the fourth fluid passage FP4. In the example illustrated in FIG. 10, the second switch valve 5B is provided at the fourth fluid passage FP4. Part of the fourth fluid passage FP4 and part of the second fluid passage FP2 may be commonized (for example, the fluid passage between the second air chamber 43A and the switch valve 5 is commonized). In the examples illustrated in FIGs. 1, 10, and 11, the second atmosphere release hole E2 is an atmosphere release hole different from the first atmosphere release hole E1. Alternatively, the second atmosphere release hole E2 and the first atmosphere release hole E1 may be identical to each other.

In the example illustrated in FIG. 11, the fluid passage FP includes a fifth fluid passage FP5 and a sixth fluid passage FP6. The fifth fluid passage FP5 fluidally connects the third air chamber 41B and a third atmosphere release hole E3 to each other. The sixth fluid passage FP6 fluidally connects the fourth air chamber 43B and a fourth atmosphere release hole E4 to each other.

In the examples illustrated in FIGs. 1, 10, and 11, the air supply source 91 that supplies air to the first air chamber 41A is identical to the air supply source 91 that supplies air to the second air chamber 43A. Alternatively, the air supply source that supplies air to the first air chamber 41A may be different from the air supply source that supplies air to the second air chamber 43A. In other words, the number of air supply sources included in the door device 1A may be two or more. The air supply source 91 may be an air pump or a compressor.

### (First Regulator 71)

In the examples illustrated in FIGs. 1, 10, and 11, the door device 1A includes the first regulator 71, which adjusts the pressure of the air supplied to the first air chamber 41A. The first regulator 71 is provided at the first fluid passage FP1 (more specifically, the fluid passage between the switch valve 5 and the first air chamber 41A). The first regulator 71 adjusts the first set pressure, which is the pressure of the air supplied to the first air chamber 41A. The first regulator 71 may be a reverse regulator that permits air to flow from the first air chamber 41A toward the switch valve 5 (in other words, a regulator with a reverse flow function).

### (Second Regulator 72)

In the examples illustrated in FIGs. 1, 10, and 11, the door device 1A includes the second regulator 72, which adjusts the pressure of the air supplied to the second air chamber 43A. The second regulator 72 is provided at the second fluid passage FP2 (more specifically, the fluid passage between the switch valve 5 and the second air chamber 43A). The second regulator 72 adjusts the second set pressure, which is the pressure of the air supplied to the second air chamber 43A. The second set pressure may be set to the value of the first set pressure, or may be set to a value different from the first set pressure. The second regulator 72 may be a reverse regulator that permits air to flow from the second air chamber 43A toward the switch valve 5 (in other words, a regulator with a reverse flow function).

Thus, the door device 1A may include the first regulator 71 and the second regulator 72 different from the first regulator 71. In this respect, because of the layout of the door 2 of the machine tool, the shape of the door 2, and/or other causes, the assist force necessary for the opening motion of the door 2 may be different from the assist force necessary for the closing motion of the door 2.The door device 1A including the first regulator 71 and the second regulator 72 is capable of individually setting assist forces necessary for different motions.

### (Controller 8)

The door device 1A may include a controller 8. The controller 8 controls a motion of the at least one switch valve 5. In the example illustrated in FIG. 1, the controller 8 receives, from the manipulation switch 6, a manipulation detection signal indicating that the manipulation switch 6 has been manipulated. Then, the controller 8 transmits a control signal to the at least one switch valve 5.

In response to a first manipulation, the manipulation switch 6 transmits a first manipulation detection signal to the controller 8. Upon receipt of the first manipulation detection signal, which indicates that the manipulation switch 6 has been subjected to the first manipulation, the controller 8 transmits a first control signal to the at least one switch valve 5 to switch the state of the at least one switch valve 5 from the first state to the second state. In a configuration in which the at least one switch valve 5 includes the first solenoid 51, the first control signal may include a control command to electrically conduct the first solenoid 51. Alternatively, the first control signal may be a current itself to electrically conduct the first solenoid 51. Upon electrical conduction of the first solenoid 51, the state of the at least one switch valve 5 is switched to the second state to fluidally connect the air supply source 91 and the first air chamber 41A to each other.

Upon receipt of the first manipulation detection signal continuously for a period of time exceeding the first threshold, the controller 8 may return the state of the at least one switch valve 5 from the second state to the first state. In this case, the first assist force is prevented from being applied continuously due to, for example, an abnormality in the manipulation switch 6. Upon receipt of the first manipulation detection signal continuously for a period of time exceeding the first threshold, the controller 8 may emit an alarm. The emission of an alarm may include generation of warning sound, lighting of a warning lamp, or display of a warning message.

In response to a second manipulation, the manipulation switch 6 transmits a second manipulation detection signal to the controller 8. Upon receipt of the second manipulation detection signal, which indicates that the manipulation switch 6 has been subjected to the second manipulation, the controller 8 transmits a second control signal to the at least one switch valve 5 to switch the state of the at least one switch valve 5 from the first state to the third state. In a configuration in which the at least one switch valve 5 includes the second solenoid 52, the second control signal may include a control command to electrically conduct the second solenoid 52. Alternatively, the second control signal may be a current itself to electrically conduct the second solenoid 52. Upon electrical conduction of the second solenoid 52, the state of the at least one switch valve 5 is switched to the third state to fluidally connect the air supply source 91 and the second air chamber 43A to each other.

Upon receipt of the second manipulation detection signal continuously for a period of time exceeding a second threshold, the controller 8 may return the state of the at least one switch valve 5 from the third state to the first state. In this case, the second assist force is prevented from being applied continuously due to, for example, an abnormality in the manipulation switch 6. Upon receipt of the second manipulation detection signal continuously for a period of time exceeding the second threshold, the controller 8 may emit an alarm. The second threshold is, for example, set to a value identical to the first threshold.

In response to the manipulation part 60 of the manipulation switch 6 returning to the default position, the signal from the manipulation switch 6 to the controller 8 is discontinued. Alternatively, in response to the manipulation part 60 of the manipulation switch 6 returning to the default position, the manipulation switch 6 may transmit a third manipulation detection signal to the controller 8. In response to a disconnection of the signal from the manipulation switch 6 (or in response to the third manipulation detection signal), the controller 8 transmits a third control signal to the at least one switch valve 5. Instead of transmitting the third control signal to the at least one switch valve 5, the controller 8 may stop transmitting the control signal to the at least one switch valve 5. Upon receipt of the third control signal (or upon disconnection of the control signal), the at least one switch valve 5 returns the state of the at least one switch valve 5 to the first state.

In the above-described example, a motion of the at least one switch valve 5 is controlled by the controller 8. Alternatively, a manipulation of the manipulation switch 6 may directly influence a motion of the switch valve 5. More specifically, the manipulation switch 6 and the switch valve 5 may be electrically connected to each other via an electric circuit, and a manipulation of the manipulation switch 6 may change the state of the electric circuit. In response to a change in the state of the electric circuit, the first solenoid 51 or the second solenoid 52 of the switch valve 5 may be driven.

Next, by referring to FIGs. 12 and 13, an example of the control performed by the controller 8 will be described. FIGs. 12 and 13 illustrate example control flows of a motion of the at least one switch valve 5.

At first step ST1, the controller 8 determines whether the manipulation switch 6 has been subjected to a first manipulation or a second manipulation. Upon receipt of a first manipulation detection signal from the manipulation switch 6, the controller 8 determines that the manipulation switch 6 has been subjected to the first manipulation, and electrically conducts the first solenoid 51 (second step ST2). Upon receipt of a second manipulation detection signal from the manipulation switch 6, the controller 8 determines that the manipulation switch 6 has been subjected to the second manipulation, and electrically conducts the second solenoid 52 (eighth step ST8).

First step ST1 may be performable only when the door 2 is in an unlocked state. In other words, when the door 2 is in a locked state, first step ST1 may be prohibited.

At second step ST2, upon electrical conduction of the first solenoid 51, the state of the at least one switch valve 5 is switched from the first state to the second state. As a result, the at least one air cylinder 4 applies a first assist force to the door 2 in the first direction *DR1.*

At third step ST3, the controller 8 determines whether the continuation period of time of the first manipulation is a first threshold or less. In other words, the controller 8 determines whether the continuation period of time of receipt of the first manipulation detection signal is the first threshold or less. When the continuation period of time of the first manipulation is the first threshold or less, the procedure proceeds to sixth step ST6. In contrast, upon receipt of the first manipulation detection signal continuously for a period of time exceeding the first threshold, the controller 8 releases the electrical conduction of the first solenoid 51 (fourth step ST4). Upon release of the electrical conduction of the first solenoid 51, the state of the at least one switch valve 5 returns to the first state from the second state. Upon receipt of the first manipulation detection signal continuously for a period of time exceeding the first threshold, the controller 8 may emit an alarm (fifth step ST5).

At sixth step ST6, the controller 8 determines whether the first manipulation has ended. In other words, the controller 8 determines whether the receipt of the first manipulation detection signal has discontinued. When the first manipulation has not ended yet, the procedure returns to third step ST3. When the first manipulation has ended, the controller 8 releases the electrical conduction of the first solenoid 51 (seventh step ST7) to end the application of the first assist force. Then, the controller 8 may perform first step ST1 again.

At eighth step ST8, upon electrical conduction of the second solenoid 52, the state of the at least one switch valve 5 is switched from the first state to the third state. As a result, the at least one air cylinder 4 applies a second assist force to the door 2 in the second direction *DR2*.

At ninth step ST9, the controller 8 determines whether the continuation period of time of the second manipulation is a second threshold or less. In other words, the controller 8 determines whether the continuation period of time of receipt of the second manipulation detection signal is the second threshold or less. When the continuation period of time of the second manipulation is the second threshold or less, the procedure proceeds to twelfth step ST12. In contrast, upon receipt of the second manipulation detection signal continuously for a period of time exceeding the second threshold, the controller 8 releases the electrical conduction of the second solenoid 52 (tenth step ST10). Upon release of the electrical conduction of the second solenoid 52, the state of the at least one switch valve 5 returns to the first state from the third state. Upon receipt of the second manipulation detection signal continuously for a period of time exceeding the second threshold, the controller 8 may emit an alarm (eleventh step ST11).

At twelfth step ST12, the controller 8 determines whether the second manipulation has ended. In other words, the controller 8 determines whether the receipt of the second manipulation detection signal has discontinued. When the second manipulation has not ended yet, the procedure returns to ninth step ST9. When the second manipulation has ended, the controller 8 releases the electrical conduction of the second solenoid 52 (thirteenth step ST13) to end the application of the second assist force. Then, the controller 8 may perform first step ST1 again.

### (Application of Braking Force in Second Direction DR2)

Upon receipt of the first manipulation signal from the manipulation switch 6, the controller 8 switches the state of the at least one switch valve 5 from the first state to the second state. As a result, the at least one air cylinder 4 applies the first assist force to the door 2 in the first direction *DR1.* Then, upon ending of the receipt of the first manipulation signal, the controller 8 may switch the state of the at least one switch valve 5 to cause the at least one air cylinder 4 to apply a braking force to the door 2 in the second direction *DR2*. More specifically, upon ending of the receipt of the first manipulation signal, the controller 8 may switch the state of the switch valve 5 from the second state to the third state. Applying a braking force to the door 2 in the second direction *DR2* shortens the distance over which the door 2 moves in the first direction *DR1* due to inertia. It is to be noted that upon passing of a predetermined first setting period of time after the switch of the state of the switch valve 5 from the second state to the third state, the controller 8 may return the state of the switch valve 5 to the first state from the third state.

In the example illustrated in FIG. 12, the braking force may be applied in the second direction *DR2* after, for example, the electrical conduction of the first solenoid 51 is released (in other words, after seventh step ST7). More specifically, after the electrical conduction of the first solenoid 51 is released, the controller 8 electrically conducts the second solenoid 52 only for the predetermined first setting period of time. As a result, air is supplied from the air supply source 91 into the second air chamber 43A, causing the braking force to be applied to the door 2 in the second direction *DR2*. Upon passing of the first setting period of time, the controller 8 releases the electrical conduction of the second solenoid 52.

### (Application of Braking Force in First Direction DR1)

Upon receipt of the second manipulation signal from the manipulation switch 6, the controller 8 switches the state of the at least one switch valve 5 from the first state to the third state. As a result, the at least one air cylinder 4 applies the second assist force to the door 2 in the second direction *DR2*. Then, upon ending of the receipt of the second manipulation signal, the controller 8 may switch the state of the at least one switch valve 5 to cause the at least one air cylinder 4 to apply a braking force the door 2 in the first direction *DR1.* More specifically, upon ending of the receipt of the second manipulation signal, the controller 8 may switch the state of the switch valve 5 from the third state to the second state. Applying a braking force to the door 2 in the first direction *DR1* shortens the distance over which the door 2 moves in the second direction *DR2* by inertia. It is to be noted that upon passing of a predetermined second setting period of time after the switch of the state of the switch valve 5 from the third state to the second state, the controller 8 may return the state of the switch valve 5 to the first state from the second state.

In the example illustrated in FIG. 13, the braking force in the first direction *DR1* may be applied after, for example, the electrical conduction of the second solenoid 52 is released (in other words, after thirteenth step ST13). More specifically, after the electrical conduction of the second solenoid 52 is released, the controller 8 electrically conducts the first solenoid 51 only for the predetermined second setting period of time. As a result, air is supplied from the air supply source 91 into the first air chamber 41A, causing the braking force to be applied to the door 2 in the first direction *DR1.* Upon passing of the second setting period of time, the controller 8 releases the electrical conduction of the first solenoid 51. It is to be noted that an example of the second setting period of time is identical in length to the first setting period of time.

### (Second Embodiment)

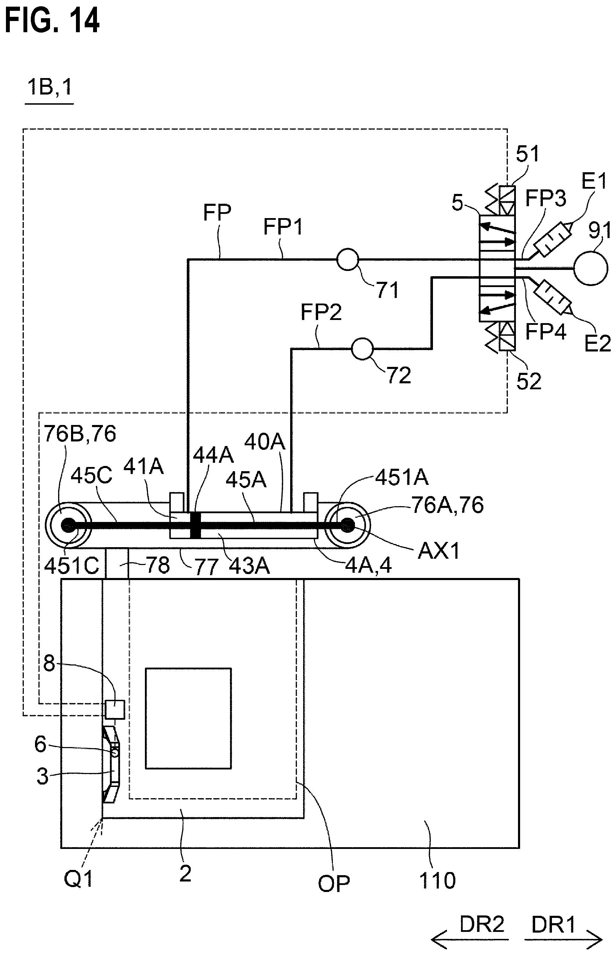

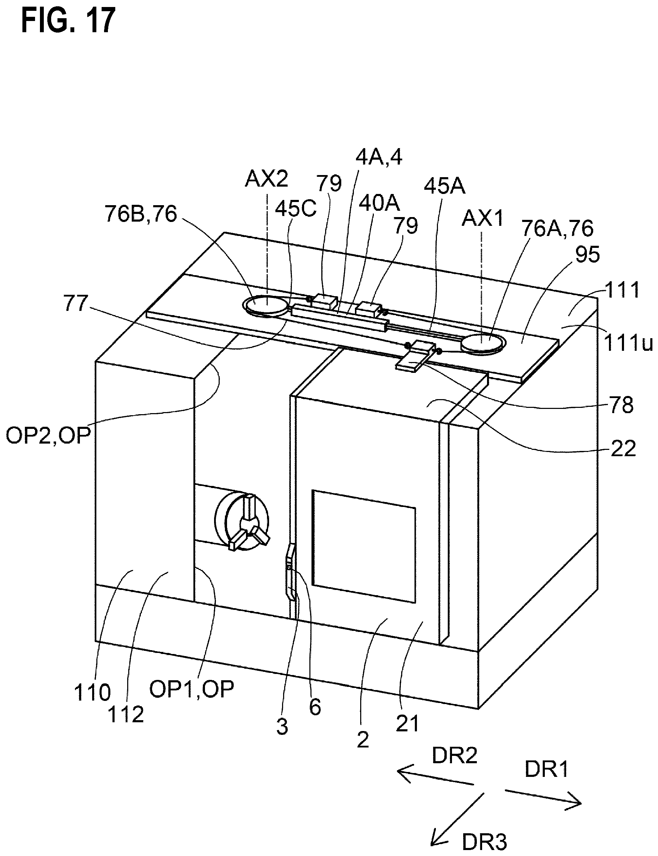

By referring to FIGs. 14 to 17, the door device 1B according to the second embodiment for a machine tool will be described. FIGs. 14 to 16 are diagrams schematically illustrating the door device 1B according to the second embodiment for a machine tool. FIG. 17 is a diagram schematically illustrating an example installation of a movable pulley 76 and/or the first air cylinder 4A.

The door device 1B according to the second embodiment for a machine tool is different from the door device 1A according to the first embodiment for a machine tool in that the door device 1B includes the movable pulley 76. In other respects, the door device 1B according to the second embodiment for a machine tool is similar to the door device 1A according to the first embodiment for a machine tool.

The following description of the second embodiment will mainly focus on those respects in which the second embodiment is different from the first embodiment. Those respects already described in the first embodiment will not be described in the second embodiment to avoid a repetition of description. Thus, it will be readily appreciated that those respects that are not explicitly described in the second embodiment but are described in the first embodiment apply in the second embodiment.

As exemplified in FIG. 14, the door device 1B according to the second embodiment for a machine tool includes the following. (1) A door 2. The door 2 is slidable between the first position Q1 and the second position Q2. The first position Q1 is a position at which the door 2 closes the opening OP of the housing 110, which defines the inner region of the machine tool. The second position Q2 is a position at which the door opens the opening OP. (2) A handle 3. The handle 3 is provided at the door 2. (3) At least one air cylinder 4. The at least one air cylinder 4 includes the first air chamber 41A and is configured to, by receiving air into the first air chamber 41A, apply a first assist force to the door 2 in a first direction *DR1* from the first position toward the second position. (4) A fluid passage FP. The fluid passage FP includes a first fluid passage FP1. The first fluid passage FP1 connects the first air chamber 41A and the air supply source 91 to each other. (5) At least one switch valve 5. The at least one switch valve 5 is provided at the fluid passage FP. (6) A manipulation switch 6. The manipulation switch 6 is configured to switch the state of the at least one switch valve 5 between the first state and the second state. The first state is a state in which the door 2 is permitted to move without the first assist force in the first direction *DR1* or the second direction *DR2* from the second position toward the first position. The second state is a state in which the first assist force is applied to the door 2 in the first direction *DR1.*

With this configuration, the door device 1B according to the second embodiment for a machine tool provides effects similar to the effects provided by the door device 1A according to the first embodiment for a machine tool.

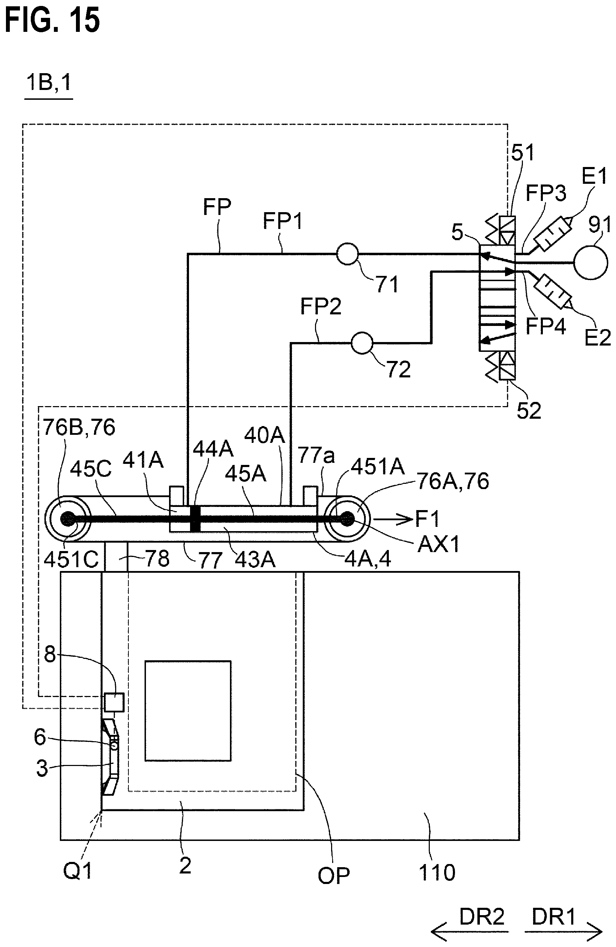

In the example illustrated in FIG. 14, the at least one air cylinder 4 includes the first piston 44A, which is driven by the air supplied into the first air chamber 41A. More specifically, the at least one air cylinder 4 includes the first air cylinder 4A. The first air cylinder 4A includes the first air chamber 41A, the second air chamber 43A, and the first piston 44A, which is provided between the first air chamber 41A and the second air chamber 43A. As exemplified in FIG. 14, when the state of the at least one switch valve 5 is the first state, the first air chamber 41A and the first atmosphere release hole E1 are fluidally connected to each other, and the second air chamber 43A and the second atmosphere release hole E2 are fluidally connected to each other. As exemplified in FIG. 15, when the state of the at least one switch valve 5 is the second state, the first air chamber 41A and the air supply source 91 are fluidally connected to each other, and the second air chamber 43A and the second atmosphere release hole E2 are fluidally connected to each other.

In the example illustrated in FIG. 15, the door device 1B includes the movable pulley 76. The movable pulley 76 converts a first displacement of the door 2 into a second displacement of the first piston 44A. The second displacement is smaller than the first displacement. For example, the second displacement is 1/2 of the first displacement.

In the example illustrated in FIG. 15, the door device 1B includes the movable pulley 76. With this configuration, the movement stroke of the first piston 44Ais small as compared with the movement stroke of the door 2. As a result, the first air cylinder 4A can be made shorter in length. In a configuration in which the movement stroke of the first piston 44A is small, a first air cylinder 4A with a smaller diameter (in other words, a first piston 44A with a smaller diameter) can be employed. The fact that the first piston 44A has a smaller diameter means that the first piston 44A has a small area that contacts the air inside the air chambers (41A and 43A) (that is, the first piston 44A has a small pressure receiving area). The fact that the first piston 44A has a small pressure receiving area means that the assist force applied to the door 2 is less variable relative to changes in the internal pressure of the air chambers. In light of the considerations above, in a configuration in which the movement stroke of the first piston 44A is small, the pressure receiving area of the first piston 44A can be made small. As a result, a lower level of accuracy is required when the regulators (71 and 72) adjust pressure.

Next, by referring to FIGs. 14 to 17, description will be made with regard to optional configurations employable in the door device 1B according to the second embodiment for a machine tool.

### (First Movable Pulley 76A)

In the example illustrated in FIG. 15, the movable pulley 76 includes a first movable pulley 76A. The first movable pulley 76A is supported by the first rod 45A (more specifically, a first end portion 451A of the first rod 45A) and rotatable about a first rotation axis AX1. A second end portion of the first rod 45A is connected to, for example, the first piston 44A.

As exemplified in FIG. 15, it will be assumed that the state of the at least one switch valve 5 is the second state. In the example illustrated in FIG. 15, the first air chamber 41A is fluidally connected to the air supply source 91. In this case, upon supply of air into the first air chamber 41A, a first force *F1* is applied to the first piston 44A, the first rod 45A, and the first movable pulley 76A in the first direction *DR1.*

In the example illustrated in FIG. 15, the door device 1B includes a flexible member 77. The flexible member 77 is guided by the first movable pulley 76A. The door 2 is directly or indirectly connected to the flexible member 77. In this case, upon application of the first force *F1* to the first movable pulley 76A in the first direction *DR1,* the flexible member 77 applies, to the door 2, a first assist force that is half the degree of the first force *F1.*

It will be assumed that by a combination of the first assist force and the manipulation force of the worker, the door 2 is moved by the first displacement in the first direction *DR1.* In this case, the first movable pulley 76A, the first rod 45A, and the first piston 44A are moved in the first direction *DR1* by a second displacement that is half the degree of the first displacement.

The flexible member 77 may be a linear material such as a wire and a cable, or may be a strip-shaped material such as a belt. In the example illustrated in FIG. 15, a first end portion 77a of the flexible member 77 is connected to the body 40A (in other words, the cylinder part) of the first air cylinder 4A. Alternatively, the first end portion 77a of the flexible member 77 may be connected to the housing 110.

### (Second Movable Pulley 76B)

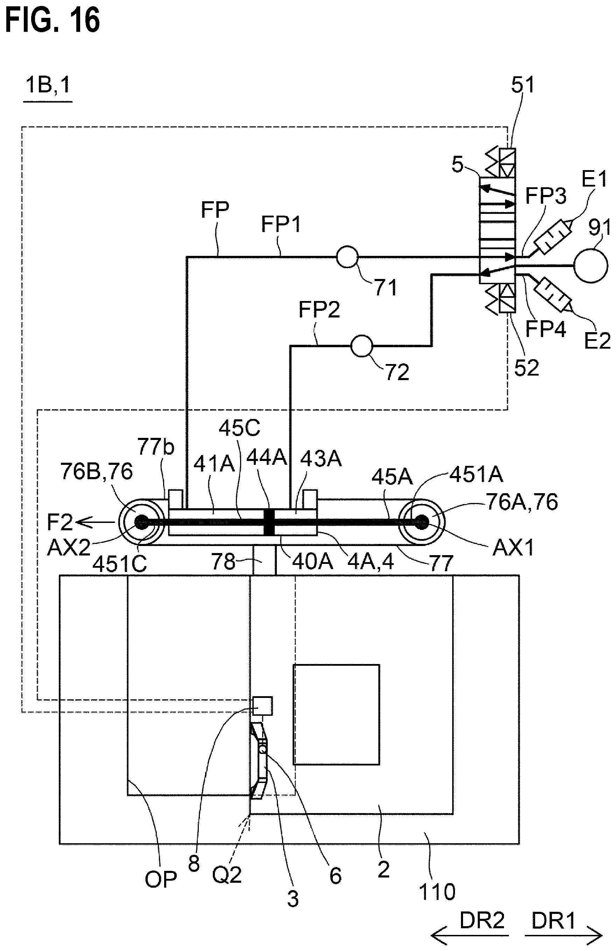

In the example illustrated in FIG. 16, the movable pulley 76 includes a second movable pulley 76B. The second movable pulley 76B is supported by a second rod 45C (more specifically, a first end portion 451C of the second rod 45C) and rotatable about a second rotation axis AX2. A second end portion of the second rod 45C is connected to, for example, the first piston 44A.

As exemplified in FIG. 16, it will be assumed that the state of the at least one switch valve 5 is the third state. In the example illustrated in FIG. 16, the second air chamber 43A is fluidally connected to the air supply source 91. In this case, upon supply of air into the second air chamber 43A, a second force *F2* is applied to the first piston 44A, the second rod 45C, and the second movable pulley 76B in the second direction *DR2*.

In the example illustrated in FIG. 16, the door device 1B includes a flexible member 77. The flexible member 77 is guided by the second movable pulley 76B. The door 2 is directly or indirectly connected to the flexible member 77. In this case, upon application of the second force *F2* to the second movable pulley 76B in the second direction *DR2,* the flexible member 77 applies, to the door 2, a second assist force that is half the degree of the second force *F2.*

It will be assumed that by a combination of the second assist force and the manipulation force of the worker, the door 2 is moved by a third displacement in the second direction *DR2*. In this case, the second movable pulley 76B, the second rod 45C, and the first piston 44A are moved in the second direction *DR2* by a fourth displacement that is half the degree of the third displacement.

In the example illustrated in FIG. 16, a second end portion 77b of the flexible member 77 is connected to the body 40A of the first air cylinder 4A. Alternatively, the second end portion 77b of the flexible member 77 may be connected to the housing 110.

In a case where a winder is provided to wind up an excessive length of wire or wind out more wire, the second movable pulley 76B may be omitted, or the second movable pulley 76B may be replaced with a fixed pulley.

### (Air Cylinder 4)

The at least one air cylinder 4 includes the first air cylinder 4A. In the example illustrated in FIG. 16, the number of air cylinders 4 included in the door device 1B is one. Alternatively, the number of air cylinders 4 included in the door device 1B may be two or more. In other words, as exemplified in FIG. 11, the at least one air cylinder 4 may include the first air cylinder 4A and the second air cylinder 4B.

In the example illustrated in FIG. 16, the first air cylinder 4A is referred to as "double rod cylinder" in English. More specifically, the first air cylinder 4A includes the first rod 45A, which protrudes from a first end portion of the body 40A in the first direction *DR1,* and the second rod 45C, which protrudes from a second end portion of the body 40A in the second direction *DR2*. At a leading end portion of the first rod 45A, the first movable pulley 76A is provided. At a leading end portion of the second rod 45C, the second movable pulley 76B is provided. In the example illustrated in FIG. 16, the flexible member 77 is guided by both the first movable pulley 76A and the second movable pulley 76B. The first movable pulley 76A is provided at the leading end portion of the first rod 45A, and the second movable pulley 76B is provided at the leading end portion of the second rod 45C.

### (Arrangement of Movable Pulley 76)

In the example illustrated in FIG. 17, the rotation axis of the movable pulley 76 is parallel to the vertical direction. More specifically, the first rotation axis AX1 of the first movable pulley 76A is parallel to the vertical direction, and the second rotation axis AX2 of the second movable pulley 76B is parallel to the vertical direction. This configuration makes the size of the movable pulley 76 compact in its height direction, and makes the entire size of the mechanism of applying assist force compact in the height direction of the mechanism.

In the example illustrated in FIG. 17, the movable pulley 76 is provided on the ceiling, 111, of the housing 110, which defines the inner region of the machine tool (more specifically, on the upper surface, 111u, of the ceiling 111). In this case, the configuration in which the rotation axis of the movable pulley 76 is parallel to the vertical direction makes the entire size of the machine tool compact in its height direction.

### (Arrangement of First Air Cylinder 4A)

In the example illustrated in FIG. 17, the first air cylinder 4A is provided on the ceiling 111 of the housing 110, which defines the inner region of the machine tool (more specifically, the upper surface 111u of the ceiling 111). In this case, it is not necessary to increase the size of the housing 110 in plan view even though the first air cylinder 4A is added. Also in the above case, it is easy to provide an existing machine tool with a mechanism of applying assist force (such as the first air cylinder 4A). In the example illustrated in FIG. 17, the body 40A of the first air cylinder 4A (in other words, the cylinder part) is fixed to the ceiling 111. The arrangement of the first air cylinder 4A in FIG. 17 may be employed in the first embodiment.

In the example illustrated in FIG. 17, the body 40A of the first air cylinder 4A is provided not to overlap the movable pulley 76 in plan view. More specifically, the body 40A of the first air cylinder 4A and the movable pulley 76 (more specifically, the first movable pulley 76A and the second movable pulley 76B) are aligned on a single horizontal surface. This configuration makes the entire size of the mechanism of applying assist force compact in the height direction of the mechanism. In the example illustrated in FIG. 17, the first movable pulley 76A, the body 40A of the first air cylinder 4A, and the second movable pulley 76B are aligned on one line parallel to the horizontal surface.

### (First Connection Member 78)

The door device 1B includes a first connection member 78. The first connection member 78 connects the door 2 and the flexible member 77 to each other. In the example illustrated in FIG. 17, the first connection member 78 is provided not to overlap the first air cylinder 4A in plan view. More specifically, the first air cylinder 4A and the first connection member 78 are aligned on the single horizontal surface. This configuration makes the entire size of the mechanism of applying assist force compact in the height direction of the mechanism. In the example illustrated in FIG. 17, the direction from the rear surface of the housing 110 toward the opening OP of the housing 110 is defined as the third direction *DR3*. In this case, the first connection member 78 is provided on the third direction *DR3* side of the first air cylinder 4A.

### (Second Connection Member 79)

The door device 1B may include at least one second connection member 79. The at least one second connection member 79 connects the ceiling 111 of the housing 110 and the flexible member 77 to each other. In the example illustrated in FIG. 17, the first air cylinder 4A and the at least one second connection member 79 are aligned on the single horizontal surface. While in the example illustrated in FIG. 17 the number of second connection members 79 is two, the number of second connection members 79 may be one or three or more. Also, in cases including a case where the flexible member 77 is an endless member, the second connection member 79 may be omitted.

### (Door 2)

In the example illustrated in FIG. 17, the number of doors 2 is one. Alternatively, the number of doors 2 may be two or more. For example, the door 2 may include a first door and a second door. The first door is movable in the first direction *DR1* to open one part of the opening OP. The second door is movable in the second direction *DR2*, which is opposite to the first direction *DR1,* to open an other part of the opening OP. In this case, each of the first door and the second door may be provided with a mechanism of applying assist force. The door 2 may also be a sliding door that includes a first panel and a second panel connected to the first panel and slidable relative to the first panel. In this case, when the opening OP is opened, the first panel and the second panel may be superimposed on each other; when the opening OP is closed, the second panel may be developed relative to the first panel to diminish the region over which the first panel and the second panel overlap. In this case, the second panel may be provided with the handle 3 with a mechanism of applying assist force to the second panel. It is to be noted that in the first or second embodiment, the number of doors 2 or the kind of the door 2 will not be limited to the above-described examples and is open to any other examples.

In the example illustrated in FIG. 17, the opening OP of the housing 110 includes a first opening OP1 and a second opening OP2. The first opening OP1 is formed on a front wall 112 of the housing 110. The second opening OP2 is formed on the ceiling 111 of the housing 110. Also in the example illustrated in FIG. 17, the door 2 includes a first plate 21 and a second plate 22. The first plate 21 closes the first opening OP1 of the front wall 112 of the housing 110. The second plate 22 closes the second opening OP2 of the ceiling 111 of the housing 110. In the example illustrated in FIG. 17, the door 2 has an approximately L-shaped cross-section perpendicular to the first direction *DR1.* It is to be noted that in the first or second embodiment, the shape of the door 2 will not be limited to the above-described examples and is open to any other examples.

### (Support Member 95)

The door device 1B may include a support member 95. The support member 95 supports the at least one air cylinder 4, the movable pulley 76, and the first connection member 78. In this case, by mounting the support member 95 on the ceiling 111, the at least one air cylinder 4, the movable pulley 76, and the first connection member 78 can be provided on the ceiling 111.

### (Switch Valve 5)

In the second embodiment, the at least one switch valve 5 may have a configuration similar to the configuration of the at least one switch valve 5 according to the first embodiment. In the example illustrated in FIG. 14, the number of switch valves 5 included in the door device 1B is one. Alternatively, the number of switch valves 5 included in the door device 1B may be two or more. For example, similarly to the example illustrated in FIG. 10, the at least one switch valve 5 may include the first switch valve 5A and the second switch valve 5B.

### (Third Embodiment)

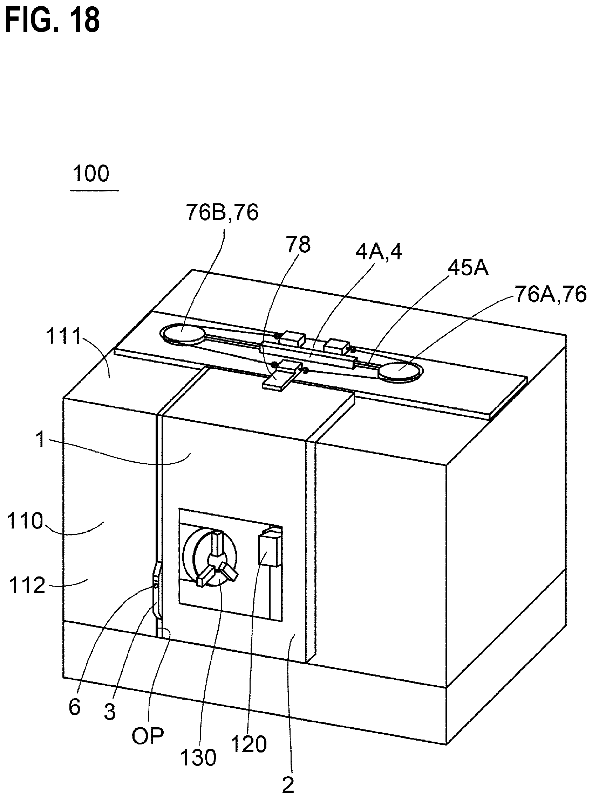

By referring to FIGs. 1 to 18, the machine tool 100 according to the third embodiment will be described. FIG. 18 is a schematic perspective view of the machine tool 100 according to the third embodiment.

The following description of the third embodiment will mainly focus on those respects in which the third embodiment is different from the 1 and 2 embodiments. In contrast, those respects already described in the first or second embodiment will not be described in the third embodiment to avoid a repetition of description. Thus, it will be readily appreciated that those respects that are not explicitly described in the third embodiment but are described in the first embodiment or the second embodiment apply in the third embodiment.

The machine tool 100 according to the third embodiment includes a machining device 120, a workpiece support device 130, the housing 110, and the door device 1.

The door device 1 may be the door device 1A according to the first embodiment, the door device 1B according to the second embodiment, or any other door device. The door device 1 includes the following. (1) A door 2. The door 2 is slidable between the first position Q1 and the second position Q2. The first position Q1 is a position at which the door 2 closes the opening OP of the housing 110. The second position Q2 is a position at which the door opens the opening OP. (2) A handle 3. The handle 3 is provided at the door 2. (3) At least one air cylinder 4. The at least one air cylinder 4 includes the first air chamber 41A and is configured to, by receiving air into the first air chamber 41A, apply a first assist force to the door 2 in a first direction *DR1* from the first position toward the second position. (4) A fluid passage FP. The fluid passage FP includes a first fluid passage FP1. The first fluid passage FP1 connects the first air chamber 41A and the air supply source 91 to each other. (5) At least one switch valve 5. The at least one switch valve 5 is provided at the fluid passage FP. (6) A manipulation switch 6. The manipulation switch 6 is configured to switch the state of the at least one switch valve 5 between the first state and the second state. The first state is a state in which the door 2 is permitted to move without the first assist force in the first direction *DR1* or the second direction *DR2* from the second position toward the first position. The second state is a state in which the first assist force is applied to the door 2 in the first direction *DR1.*

The machining device 120 machines a workpiece. The machining device 120 is capable of holding a tool for machining the workpiece.

The workpiece support device 130 supports the workpiece machined by the machining device 120.

The housing 110 surrounds the machining device 120 and the workpiece support device 130. The housing 110 includes the opening OP. Prior to the machining performed by the machining device 120, the workpiece is inserted into the housing 110 through the opening OP. After the machining performed by the machining device 120 ends, the workpiece is taken through the opening OP.

The present invention will not be limited to the above-described and/or modifications, i.e. the embodiments may be modified or changed in any manner which fall under the scope of the present invention as defined by the appended claims.

### Reference Signs List

1, 1A, 1B ... Door device, 2 ... Door, 3 ... Handle, 3h ... Open area, 4 ... Air cylinder, 4A... First air cylinder, 4B ... Second air cylinder, 5 ... Switch valve, 5A... First switch valve, 5B ... Second switch valve, 6 ... Manipulation switch, 8 ... Controller, 21 ... First plate, 22 ... Second plate, 25 ... Main surface, 31 ... Outer surface, 31f ... Third direction side surface, 31u ... Fourth direction side surface, 40A ... Body, 41A... First air chamber, 41B ... Third air chamber, 43A... Second air chamber, 43B ... Fourth air chamber, 44A... First piston, 44B ... Second piston, 45A ... First rod, 45B ... Second rod, 45C ... Second rod, 51 ... First solenoid, 52 ... Second solenoid, 60 ... Manipulation part, 61 ... First manipulation part, 62 ... Second manipulation part, 64 ... Manipulation-part support member, 66a ... First sensor, 66b ... Second sensor, 71 ... First regulator, 72 ... Second regulator, 76 ... Movable pulley, 76A... First movable pulley, 76B ... Second movable pulley, 77 ... Flexible member, 77a ... First end portion, 77b ... Second end portion, 78 ... First connection member, 79 ... Second connection member, 91 ... Air supply source, 95 ... Support member, 100 ... Machine tool, 110 ... Housing, 111 ... Ceiling, 111u ... Upper surface, 112 ... Front wall, 120 ... Machining device, 130 ... Workpiece support device, 451A ... First end portion, 451C ... First end portion, E1 ... First atmosphere release hole, E2 ... Second atmosphere release hole, E3 ... Third atmosphere release hole, E4 ... Fourth atmosphere release hole, FP ... Fluid passage, FP 1 ... First fluid passage, FP2 ... Second fluid passage, FP3 ... Third fluid passage, FP4 ... Fourth fluid passage, FP5 ... Fifth fluid passage, FP6 ... Sixth fluid passage, OP ... Opening, OP1 ... First opening, OP2 ... Second opening

## Claims

1. A door device (1, 1A, 1B) for a machine tool (100), the door device (1, 1A, 1B) comprising:
a door (2) slidable between:
a first position (Q1) at which the door (2) closes an opening (OP) of a housing (110) defining an inner region of the machine tool (100); and
a second position (Q2) at which the door (2) opens the opening (OP);
a handle (3) provided at the door (2);
at least one air cylinder (4) comprising a first air chamber (41A) and configured to, by receiving air into the first air chamber (41A), apply a first assist force to the door (2) in a first direction (DR1) from the first position (Q1) toward the second position (Q2);
a fluid passage (FP) comprising a first fluid passage (FP1) connecting the first air chamber (41A) and an air supply source (91) to each other;
at least one switch valve (5) provided at the fluid passage (FP); and
**characterized in that** the door device (1, 1A, 1B) further comprises:
a manipulation switch (6) configured to switch a state of the at least one switch valve (5) between a first state and a second state, the first state being a state in which the door (2) is permitted to move without the first assist force in the first direction (DR1) or a second direction (DR2) from the second position (Q2) toward the first position (Q1), and the second state being a state in which the first assist force is applied to the door (2) in the first direction (DR1), wherein
the manipulation switch (6) is configured to be manipulated independently from a manipulation of the handle (3).

2. The door device (1, 1A, 1B) for the machine tool (100), according to claim 1,
wherein in the first state, the at least one switch valve (5) is configured to fluidally connect the first air chamber (41A) to a first atmosphere release hole (E1) through which the air inside the first air chamber (41A) is released, and
wherein in the second state, the at least one switch valve (5) is configured to fluidally connect the first air chamber (41A) and the air supply source (91) to each other.

3. The door device (1, 1A, 1B) for the machine tool (100), according to claim 1 or 2, wherein the first assist force is smaller in degree than a force necessary for sliding the door (2).

4. The door device (1, 1A, 1B) for the machine tool (100), according to any one of claims 1 to 3, wherein the manipulation switch (6) is provided at the handle (3) in a manner in which the handle (3) is holdable by a hand simultaneously while the manipulation switch (6) is manipulable by a finger of the hand.

5. The door device (1, 1A, 1B) for the machine tool (100), according to any one of claims 1 to 4,
wherein the at least one air cylinder (4) comprises a second air chamber (43A),
wherein by receiving air into the second air chamber (43A), the at least one air cylinder (4) is configured to apply a second assist force to the door (2) in the second direction (DR2),
wherein the fluid passage (FP) comprises a second fluid passage (FP2) connecting the second air chamber (43A) and the air supply source (91) to each other, and
wherein the manipulation switch (6) is further configured to switch the state of the at least one switch valve (5) between the first state and a third state, the first state being a state in which the door (2) is permitted to move in the first direction (DR1) or the second direction (DR2) without the first assist force and the second assist force, the third state being a state in which the second assist force is applied to the door (2) in the second direction (DR2).

6. The door device (1, 1A, 1B) for the machine tool (100), according to claim 2,
wherein the at least one air cylinder (4) comprises a second air chamber (43A),
wherein by receiving air into the second air chamber (43A), the at least one air cylinder (4) is configured to apply a second assist force to the door (2) in the second direction (DR2),
wherein the fluid passage (FP) comprises a second fluid passage (FP2) connecting the second air chamber (43A) and the air supply source (91) to each other,
wherein the manipulation switch (6) is further configured to switch the state of the at least one switch valve (5) between the first state and a third state, the first state being a state in which the door (2) is permitted to move in the first direction (DR1) or the second direction (DR2) without the first assist force and the second assist force, the third state being a state in which the second assist force is applied to the door (2) in the second direction (DR2),
wherein in the first state, the at least one switch valve (5) is configured to fluidally connect the first atmosphere release hole (E1) and the first air chamber (41A) to each other, and configured to fluidally connect the second air chamber (43A) to a second atmosphere release hole (E2) through which the air inside the second air chamber (43A) is released, and
wherein in the third state, the at least one switch valve (5) is configured to fluidally connect the first atmosphere release hole (E1) and the first air chamber (41A) to each other, and configured to fluidally connect the air supply source (91) and the second air chamber (43A)to each other.

7. The door device (1, 1A, 1B) for the machine tool (100), according to claim 5 or 6, wherein the second assist force is smaller in degree than a force necessary for sliding the door (2).

8. The door device (1, 1A, 1B) for the machine tool (100), according to any one of claims 5 to 7,
wherein the manipulation switch (6) comprises
a first manipulation part (61) configured to switch the state of the at least one switch valve (5) from the first state to the second state, and
a second manipulation part (62) configured to switch the state of the at least one switch valve (5) from the first state to the third state, and
wherein the first manipulation part (61) is provided further in the first direction (DR1) than the second manipulation part (62).

9. The door device (1, 1A, 1B) for the machine tool (100), according to any one of claims 5 to 8, further comprising:
a first regulator (71) configured to adjust a pressure of the air supplied to the first air chamber (41A) to a first set pressure; and
a second regulator (72) configured to adjust a pressure of the air supplied to the second air chamber (43A) to a second set pressure.

10. The door device (1, 1A, 1B) for the machine tool (100), according to any one of claims 1 to 9, further comprising a controller (8) configured to receive a first manipulation detection signal indicating that the manipulation switch (6) has been subjected to a first manipulation,
wherein upon receipt of the first manipulation detection signal, the controller (8) is configured to switch the state of the at least one switch valve (5) from the first state to the second state, and
wherein upon receipt of the first manipulation detection signal continuously for a period of time exceeding a first threshold, the controller (8) is configured to return the state of the at least one switch valve (5) from the second state to the first state.

11. The door device (1, 1A, 1B) for the machine tool (100), according to any one of claims 1 to 9, further comprising a controller (8) configured to receive a first manipulation detection signal indicating that the manipulation switch (6) has been subjected to a first manipulation,
wherein upon receipt of the first manipulation detection signal, the controller (8) is configured to switch the state of the at least one switch valve (5) from the first state to the second state, and
wherein upon ending of the receipt of the first manipulation detection signal, the controller (8) is configured to switch the state of the at least one switch valve (5) to cause the at least one air cylinder (4) to apply a braking force to the door (2) in the second direction (DR2).

12. The door device (1, 1A, 1B) for the machine tool (100), according to any one of claims 1 to 11, further comprising a movable pulley (76),
wherein the at least one air cylinder (4) comprises a first piston (44A) drivable by the air supplied to the first air chamber (41A), and
wherein the movable pulley (76) is configured to convert a first displacement of the door (2) into a second displacement of the first piston (44A), the second displacement being smaller than the first displacement.

13. The door device (1, 1A, 1B) for the machine tool (100), according to claim 12, wherein a rotation axis (AX1) of the movable pulley (76) is parallel to a vertical direction.

14. A machine tool (100) comprising:
a machining device (120) configured to machine a workpiece;
a workpiece support device (130) configured to support the workpiece;
the housing (110) surrounding the machining device (120) and the workpiece support device (130) and having the opening (OP); and
the door device (1, 1A, 1B) according to any one of claims 1 to 13.

## Patentansprüche

1. Türvorrichtung (1, 1A, 1B) für eine Werkzeugmaschine (100), wobei die Türvorrichtung (1, 1A, 1B) Folgendes aufweist:
eine Tür (2), die zwischen folgenden Positionen verschiebbar ist:
einer ersten Position (Q1), in der die Tür (2) eine Öffnung (OP) eines Gehäuses (110) verschließt, das einen Innenbereich der Werkzeugmaschine (100) definiert; und
einer zweiten Position (Q2), in der die Tür (2) die Öffnung (OP) öffnet;
einen an der Tür (2) vorgesehenen Griff (3);
zumindest einen Luftzylinder (4), der eine erste Luftkammer (41A) aufweist und gestaltet ist, um durch Erhalten von Luft in die erste Luftkammer (41A) eine erste Unterstützungskraft auf die Tür (2) in einer ersten Richtung (DR1) von der ersten Position (Q1) in Richtung der zweiten Position (Q2) aufzubringen;
einen Fluiddurchgang (FP), der einen ersten Fluiddurchgang (FP1) aufweist, der die erste Luftkammer (41A) und eine Luftzufuhrquelle (91) miteinander verbindet;
zumindest ein Schaltventil (5), das an dem Fluiddurchgang (FP) vorgesehen ist; und
**dadurch gekennzeichnet, dass** die Türvorrichtung (1, 1A, 1B) des Weiteren Folgendes aufweist:
einen Betätigungsschalter (6), der gestaltet ist, um einen Zustand des zumindest einen Schaltventils (5) zwischen einem ersten Zustand und einem zweiten Zustand umzuschalten, wobei der erste Zustand ein Zustand ist, in dem sich die Tür (2) ohne die erste Unterstützungskraft in der ersten Richtung (DR1) oder einer zweiten Richtung (DR2) von der zweiten Position (Q2) in Richtung der ersten Position (Q1) bewegen kann, und der zweite Zustand ein Zustand ist, in dem die erste Unterstützungskraft auf die Tür (2) in der ersten Richtung (DR1) aufgebracht wird, wobei
der Betätigungsschalter (6) gestaltet ist, um unabhängig von einer Betätigung des Griffs (3) betätigt zu werden.

2. Türvorrichtung (1, 1A, 1B) für die Werkzeugmaschine (100) nach Anspruch 1,
wobei in dem ersten Zustand das zumindest eine Schaltventil (5) gestaltet ist, um die erste Luftkammer (41A) mit einem ersten Atmosphärenablassloch (E1) fluidisch zu verbinden, durch das die Luft innerhalb der ersten Luftkammer (41A) abgelassen wird, und
wobei in dem zweiten Zustand das zumindest eine Schaltventil (5) gestaltet ist, um die erste Luftkammer (41A) und die Luftzufuhrquelle (91) miteinander fluidisch zu verbinden.

3. Türvorrichtung (1, 1A, 1B) für die Werkzeugmaschine (100) nach Anspruch 1 oder 2, wobei die erste Unterstützungskraft geringer ist als eine Kraft, die zum Verschieben der Tür (2) erforderlich ist.

4. Türvorrichtung (1, 1A, 1B) für die Werkzeugmaschine (100) nach einem der Ansprüche 1 bis 3, wobei der Betätigungsschalter (6) an dem Griff (3) derart vorgesehen ist, dass der Griff (3) mit einer Hand gehalten werden kann, während gleichzeitig der Betätigungsschalter (6) mit einem Finger der Hand betätigt werden kann.

5. Türvorrichtung (1, 1A, 1B) für die Werkzeugmaschine (100) nach einem der Ansprüche 1 bis 4,
wobei der mindestens eine Luftzylinder (4) eine zweite Luftkammer (43A) aufweist,
wobei der zumindest eine Luftzylinder (4) durch Erhalten von Luft in die zweite Luftkammer (43A) gestaltet ist, um eine zweite Unterstützungskraft auf die Tür (2) in der zweiten Richtung (DR2) aufzubringen,
wobei der Fluiddurchgang (FP) einen zweiten Fluiddurchgang (FP2) aufweist, der die zweite Luftkammer (43A) und die Luftzufuhrquelle (91) miteinander verbindet, und
wobei der Betätigungsschalter (6) des Weiteren gestaltet ist, um den Zustand des zumindest einen Schaltventils (5) zwischen dem ersten Zustand und einem dritten Zustand umzuschalten, wobei der erste Zustand ein Zustand ist, in dem sich die Tür (2) ohne die erste Unterstützungskraft und die zweite Unterstützungskraft in der ersten Richtung (DR1) oder der zweiten Richtung (DR2) bewegen kann, wobei der dritte Zustand ein Zustand ist, in dem die zweite Unterstützungskraft auf die Tür (2) in der zweiten Richtung (DR2) aufgebracht wird.

6. Türvorrichtung (1, 1A, 1B) für die Werkzeugmaschine (100) nach Anspruch 2,
wobei der zumindest eine Luftzylinder (4) eine zweite Luftkammer (43A) aufweist,
wobei der zumindest eine Luftzylinder (4) durch Erhalten von Luft in die zweite Luftkammer (43A) gestaltet ist, um eine zweite Unterstützungskraft auf die Tür (2) in der zweiten Richtung (DR2) aufzubringen,
wobei der Fluiddurchgang (FP) einen zweiten Fluiddurchgang (FP2) aufweist, der die zweite Luftkammer (43A) und die Luftzufuhrquelle (91) miteinander verbindet,
wobei der Betätigungsschalter (6) des Weiteren gestaltet ist, um den Zustand des zumindest einen Schaltventils (5) zwischen dem ersten Zustand und einem dritten Zustand umzuschalten, wobei der erste Zustand ein Zustand ist, in dem sich die Tür (2) ohne die erste Unterstützungskraft und die zweite Unterstützungskraft in der ersten Richtung (DR1) oder der zweiten Richtung (DR2) bewegen kann, wobei der dritte Zustand ein Zustand ist, in dem die zweite Unterstützungskraft auf die Tür (2) in der zweiten Richtung (DR2) aufgebracht wird,
wobei in dem ersten Zustand das zumindest eine Schaltventil (5) gestaltet ist, um das erste Atmosphärenablassloch (E1) und die erste Luftkammer (41A) miteinander fluidisch zu verbinden, und gestaltet ist, um die zweite Luftkammer (43A) mit einem zweiten Atmosphärenablassloch (E2) fluidisch zu verbinden, durch das die Luft innerhalb der zweiten Luftkammer (43A) abgelassen wird, und
wobei in dem dritten Zustand das zumindest eine Schaltventil (5) gestaltet ist, um das erste Atmosphärenablassloch (E1) und die erste Luftkammer (41A) miteinander fluidisch zu verbinden, und gestaltet ist, um die Luftzufuhrquelle (91) und die zweite Luftkammer (43A) miteinander fluidisch zu verbinden.

7. Türvorrichtung (1, 1A, 1B) für die Werkzeugmaschine (100) nach Anspruch 5 oder 6, wobei die zweite Unterstützungskraft geringer ist als eine Kraft, die zum Verschieben der Tür (2) erforderlich ist.

8. Türvorrichtung (1, 1A, 1B) für die Werkzeugmaschine (100) nach einem der Ansprüche 5 bis 7,
wobei der Betätigungsschalter (6) Folgendes aufweist:
einen ersten Betätigungsteil (61), der gestaltet ist, um den Zustand des zumindest einen Schaltventils (5) von dem ersten Zustand in den zweiten Zustand umzuschalten, und
einen zweiten Betätigungsteil (62), der gestaltet ist, um den Zustand des zumindest einen Schaltventils (5) von dem ersten Zustand in den dritten Zustand umzuschalten, und
wobei der erste Betätigungsteil (61) weiter in der ersten Richtung (DR1) vorgesehen ist als der zweite Betätigungsteil (62).

9. Türvorrichtung (1, 1A, 1B) für die Werkzeugmaschine (100) nach einem der Ansprüche 5 bis 8, die des Weiteren Folgendes aufweist:
einen ersten Regler (71), der gestaltet ist, um einen Druck der zu der ersten Luftkammer (41A) zugeführten Luft auf einen ersten festgelegten Druck einzustellen; und
einen zweiten Regler (72), der gestaltet ist, um einen Druck der zu der zweiten Luftkammer (43A) zugeführten Luft auf einen zweiten festgelegten Druck einzustellen.

10. Türvorrichtung (1, 1A, 1B) für die Werkzeugmaschine (100) nach einem der Ansprüche 1 bis 9, die des Weiteren ein Steuerungsgerät (8) aufweist, das gestaltet ist, um ein erstes Betätigungserfassungssignal zu erhalten, das anzeigt, dass der Betätigungsschalter (6) einer ersten Betätigung ausgesetzt wurde,
wobei das Steuerungsgerät (8) beim Erhalt des ersten Betätigungserfassungssignals gestaltet ist, um den Zustand des zumindest einen Schaltventils (5) von dem ersten Zustand in den zweiten Zustand umzuschalten, und
wobei das Steuerungsgerät (8) beim kontinuierlichen Erhalt des ersten Betätigungserfassungssignals über einen Zeitraum, der einen ersten Schwellenwert überschreitet, gestaltet ist, um den Zustand des zumindest einen Schaltventils (5) von dem zweiten Zustand in den ersten Zustand zurückzustellen.

11. Türvorrichtung (1, 1A, 1B) für die Werkzeugmaschine (100) nach einem der Ansprüche 1 bis 9, die des Weiteren ein Steuerungsgerät (8) aufweist, das gestaltet ist, um ein erstes Betätigungserfassungssignal zu erhalten, das anzeigt, dass der Betätigungsschalter (6) einer ersten Betätigung ausgesetzt wurde,
wobei das Steuerungsgerät (8) beim Erhalt des ersten Betätigungserfassungssignals gestaltet ist, um den Zustand des zumindest einen Schaltventils (5) von dem ersten Zustand in den zweiten Zustand umzuschalten, und
wobei das Steuerungsgerät (8) bei Beendigung des Erhalts des ersten Betätigungserfassungssignals gestaltet ist, um den Zustand des zumindest einen Schaltventils (5) umzuschalten, um zu bewirken, dass der zumindest eine Luftzylinder (4) eine Bremskraft auf die Tür (2) in der zweiten Richtung (DR2) aufbringt.

12. Türvorrichtung (1, 1A, 1B) für die Werkzeugmaschine (100) nach einem der Ansprüche 1 bis 11, die des Weiteren eine bewegliche Antriebsscheibe (76) aufweist,
wobei der zumindest eine Luftzylinder (4) einen ersten Kolben (44A) aufweist, der durch die zu der ersten Luftkammer (41A) zugeführten Luft angetrieben werden kann, und
wobei die bewegliche Riemenscheibe (76) gestaltet ist, um eine erste Verschiebung der Tür (2) in eine zweite Verschiebung des ersten Kolbens (44A) umzuwandeln, wobei die zweite Verschiebung kleiner ist als die erste Verschiebung.

13. Türvorrichtung (1, 1A, 1B) für die Werkzeugmaschine (100) nach Anspruch 12, wobei eine Drehachse (AX1) der beweglichen Antriebsscheibe (76) parallel zu einer vertikalen Richtung verläuft.

14. Werkzeugmaschine (100), die Folgendes aufweist:
eine Bearbeitungsvorrichtung (120), die gestaltet ist, um ein Werkstück zu bearbeiten;
eine Werkstückstützvorrichtung (130), die gestaltet ist, um das Werkstück zu stützen;
ein Gehäuse (110), das die Bearbeitungsvorrichtung (120) und die Werkstückstützvorrichtung (130) umgibt und die Öffnung (OP) hat; und
die Türvorrichtung (1, 1A, 1B) nach einem der Ansprüche 1 bis 13.

## Revendications

1. Dispositif de porte (1, 1A, 1B) pour une machine-outil (100), le dispositif de porte (1, 1A, 1B) comprenant :
une porte (2) pouvant coulisser entre :
une première position (Q1) dans laquelle la porte (2) ferme une ouverture (OP) d'un boîtier (110) définissant une région intérieure de la machine-outil (100) ; et
une deuxième position (Q2) dans laquelle la porte (2) ouvre l'ouverture (OP) ;
une poignée (3) prévue sur la porte (2) ;
au moins un cylindre pneumatique (4) comprenant une première chambre à air (41A) et configuré pour, en recevant de l'air dans la première chambre à air (41A), appliquer une première force d'assistance à la porte (2) dans une première direction (DR1) depuis la première position (Q1) vers la deuxième position (Q2) ;
un passage de fluide (FP) comprenant un premier passage de fluide (FP1) reliant la première chambre à air (41A) et une source d'alimentation en air (91) l'une à l'autre ;
au moins une soupape de commande (5) prévue au passage de fluide (FP) ; et
**caractérisé en ce que** le dispositif de porte (1, 1A, 1B) comprend en outre :
un commutateur de manipulation (6) configuré pour commuter un état de l'au moins une soupape de commande (5) entre un premier état et un deuxième état, le premier état étant un état dans lequel la porte (2) est autorisée à se déplacer sans la première force d'assistance dans la première direction (DR1) ou une seconde direction (DR2) depuis la seconde position (Q2) vers la première position (Q1), et le deuxième état étant un état dans lequel la première force d'assistance est appliquée à la porte (2) dans la première direction (DR1), dans lequel
le commutateur de manipulation (6) est configuré pour être manipulé indépendamment d'une manipulation de la poignée (3).

2. Dispositif de porte (1, 1A, 1B) pour la machine-outil (100) selon la revendication 1,
dans lequel, dans le premier état, l'au moins une soupape de commande (5) est configurée pour relier de manière fluidique la première chambre à air (41A) à un premier trou de libération d'atmosphère (E1) à travers lequel l'air à l'intérieur de la première chambre à air (41A) est libéré, et
dans lequel, dans le deuxième état, l'au moins une soupape de commande (5) est configurée pour relier de manière fluidique la première chambre à air (41A) et la source d'alimentation en air (91) l'une à l'autre.

3. Dispositif de porte (1, 1A, 1B) pour la machine-outil (100) selon la revendication 1 ou 2, dans lequel la première force d'assistance est d'un degré inférieur à une force nécessaire pour faire coulisser la porte (2).

4. Dispositif de porte (1, 1A, 1B) pour la machine-outil (100) selon l'une quelconque des revendications 1 à 3, dans lequel le commutateur de manipulation (6) est prévu à la poignée (3) de manière à ce que la poignée (3) puisse être tenue par une main tout en permettant la manipulation du commutateur de manipulation (6) par un doigt de la main.

5. Dispositif de porte (1, 1A, 1B) pour la machine-outil (100) selon l'une quelconque des revendications 1 à 4,
dans lequel l'au moins un cylindre pneumatique (4) comprend une deuxième chambre à air (43A),
dans lequel, en recevant de l'air dans la deuxième chambre à air (43A), l'au moins un cylindre pneumatique (4) est configuré pour appliquer une deuxième force d'assistance à la porte (2) dans la deuxième direction (DR2),
dans lequel le passage de fluide (FP) comprend un deuxième passage de fluide (FP2) reliant la deuxième chambre à air (43A) et la source d'alimentation en air (91) l'une à l'autre, et
dans lequel le commutateur de manipulation (6) est en outre configuré pour commuter l'état de l'au moins une soupape de commande (5) entre le premier état et un troisième état, le premier état étant un état dans lequel la porte (2) est autorisée à se déplacer dans la première direction (DR1) ou la deuxième direction (DR2) sans la première force d'assistance et la deuxième force d'assistance, le troisième état étant un état dans lequel la deuxième force d'assistance est appliquée à la porte (2) dans la deuxième direction (DR2).

6. Dispositif de porte (1, 1A, 1B) pour la machine-outil (100) selon la revendication 2,
dans lequel l'au moins un cylindre pneumatique (4) comprend une deuxième chambre à air (43A),
dans lequel, en recevant de l'air dans la deuxième chambre à air (43A), l'au moins un cylindre pneumatique (4) est configuré pour appliquer une deuxième force d'assistance à la porte (2) dans la deuxième direction (DR2),
dans lequel le passage de fluide (FP) comprend un deuxième passage de fluide (FP2) reliant la deuxième chambre à air (43A) et la source d'alimentation en air (91) l'une à l'autre,
dans lequel le commutateur de manipulation (6) est en outre configuré pour commuter l'état du au moins une soupape de commande (5) entre le premier état et un troisième état,
le premier état étant un état dans lequel la porte (2) est autorisée à se déplacer dans la première direction (DR1) ou la deuxième direction (DR2) sans la première force d'assistance et la deuxième force d'assistance, le troisième état étant un état dans lequel la deuxième force d'assistance est appliquée à la porte (2) dans la deuxième direction (DR2),
dans lequel, dans le premier état, l'au moins une soupape de commande (5) est configurée pour relier de manière fluidique le premier trou de libération d'atmosphère (E1) et la première chambre à air (41A) l'un à l'autre, et configurée pour relier de manière fluidique la deuxième chambre à air (43A) à un deuxième trou de libération d'atmosphère (E2) à travers lequel l'air à l'intérieur de la deuxième chambre à air (43A) est libéré, et
dans lequel, dans le troisième état, l'au moins une soupape de commande (5) est configurée pour relier de manière fluidique le premier trou de libération d'atmosphère (E1) et la première chambre à air (41A) l'un à l'autre, et configurée pour relier de manière fluidique la source d'alimentation en air (91) et la deuxième chambre à air (43A) l'une à l'autre.

7. Dispositif de porte (1, 1A, 1B) pour la machine-outil (100) selon la revendication 5 ou 6, dans lequel la deuxième force d'assistance est d'un degré inférieur à une force nécessaire pour faire coulisser la porte (2).

8. Dispositif de porte (1, 1A, 1B) pour la machine-outil (100) selon l'une quelconque des revendications 5 à 7,
dans lequel le commutateur de manipulation (6) comprend
une première partie de manipulation (61) configurée pour commuter l'état de l'au moins une soupape de commande (5) du premier état au deuxième état, et
une deuxième partie de manipulation (62) configurée pour commuter l'état de l'au moins une soupape de commande (5) du premier état au troisième état, et
dans lequel la première partie de manipulation (61) est prévue plus loin dans la première direction (DR1) que la deuxième partie de manipulation (62).

9. Dispositif de porte (1, 1A, 1B) pour la machine-outil (100), selon l'une quelconque des revendications 5 à 8, comprenant en outre :
un premier régulateur (71) configuré pour ajuster une pression de l'air fourni à la première chambre à air (41A) à une première pression déterminée ; et
un deuxième régulateur (72) configuré pour ajuster une pression de l'air fourni à la deuxième chambre à air (43A) à une deuxième pression déterminée.

10. Dispositif de porte (1, 1A, 1B) pour la machine-outil (100), selon l'une quelconque des revendications 1 à 9, comprenant en outre un contrôleur (8) configuré pour recevoir un premier signal de détection de manipulation indiquant que le commutateur de manipulation (6) a été soumis à une première manipulation,
dans lequel, à la réception du premier signal de détection de manipulation, le contrôleur (8) est configuré pour commuter l'état de l'au moins une soupape de commande (5) du premier état au deuxième état, et
dans lequel, à la réception du premier signal de détection de manipulation de manière continue pendant une période de temps dépassant un premier seuil, le contrôleur (8) est configuré pour ramener l'état d'au moins une soupape de commande (5) du deuxième état au premier état.

11. Dispositif de porte (1, 1A, 1B) pour la machine-outil (100), selon l'une quelconque des revendications 1 à 9, comprenant en outre un contrôleur (8) configuré pour recevoir un premier signal de détection de manipulation indiquant que le commutateur de manipulation (6) a été soumis à une première manipulation,
dans lequel, à la réception du premier signal de détection de manipulation, le contrôleur (8) est configuré pour commuter l'état de l'au moins une soupape de commande (5) du premier état au deuxième état, et
dans lequel, à la fin de la réception du premier signal de détection de manipulation, le contrôleur (8) est configuré pour commuter l'état de l'au moins une soupape de commande (5) afin d'amener l'au moins un cylindre pneumatique (4) à appliquer une force de freinage à la porte (2) dans la deuxième direction (DR2).

12. Dispositif de porte (1, 1A, 1B) pour la machine-outil (100) selon l'une quelconque des revendications 1 à 11, comprenant en outre une poulie mobile (76),
dans lequel l'au moins un cylindre pneumatique (4) comprend un premier piston (44A) pouvant être entraîné par l'air fourni à la première chambre à air (41A), et
dans lequel la poulie mobile (76) est configurée pour convertir un premier déplacement de la porte (2) en un deuxième déplacement du premier piston (44A), le deuxième déplacement étant plus petit que le premier déplacement.

13. Dispositif de porte (1, 1A, 1B) pour la machine-outil (100) selon la revendication 12, dans lequel un axe de rotation (AX1) de la poulie mobile (76) est parallèle à une direction verticale.

14. Machine-outil (100) comprenant :
un dispositif d'usinage (120) configuré pour usiner une pièce à usiner ;
un dispositif de support de pièce à usiner (130) configuré pour supporter la pièce à usiner ;
le boîtier (110) entourant le dispositif d'usinage (120) et le dispositif de support de pièce à usiner (130) et comportant l'ouverture (OP) ; et
le dispositif de porte (1, 1A, 1B) selon l'une quelconque des revendications 1 à 13.
